# EUROPEAN PATENT APPLICATION

(11) **EP 4 351 192 A1**
(43) Date of publication of application: **10.04.2024**
(21) Application number: 22832144.4
(22) Date of filing: 29.06.2022
(51) Int. Cl.: H04W 12/03

(54) **RELAY COMMUNICATION METHOD, APPARATUS AND SYSTEM**

(30) Priority: 30.06.2021 CN 202110742724
(71) Applicant: Huawei Technologies Co., Ltd., Shenzhen, Guangdong 518129 (CN)
(72) Inventor: LI, Xiangyu, Shenzhen, Guangdong 518129 (CN); PENG, Wenjie, Shenzhen, Guangdong 518129 (CN)
(74) Representative: Epping - Hermann - Fischer
(86) International application number: PCT/CN2022/102557
(87) International publication number: WO 2023/274332

(57) **Abstract**

Embodiments of this application provide a relay communication method, apparatus, and system. In the method, when a first terminal device communicates with a second terminal device through a relay device, the relay device may send a second identifier to the second terminal device based on a first identifier received from the first terminal device, so that both the second identifier and the first identifier may indicate a security protection parameter; or the first terminal device sends an RB configuration to the second terminal device by using the relay device. The RB configuration includes the first identifier and a PDCP entity configuration; or the RB configuration includes the PDCP entity configuration, and the PDCP entity configuration includes the first identifier. According to the method in this application, the first terminal device and the second terminal device may perform data transmission by using the same security protection parameter, to ensure correctness and effectiveness of data security protection in a process in which the first terminal device communicates with the second terminal device through the relay device.

## Description

This application claims priority to Chinese Patent Application No. 202110742724.3, filed with the China National Intellectual Property Administration on June 30, 2021 and entitled "RELAY COMMUNICATION METHOD, APPARATUS, AND SYSTEM", which is incorporated herein by reference in its entirety.

### TECHNICAL FIELD

Embodiments of this application relate to communication technologies, and in particular, to a relay communication method, apparatus, and system.

### BACKGROUND

Currently, two terminal devices (for example, a first terminal device and a second terminal device) may directly communicate with each other through a sidelink (sidelink, SL) by using a resource configured by a network device, without forwarding through the network device. Currently, to further enhance a coverage capability of the SL, a terminal device to terminal device relay (UE to UE Relay, U2U Relay) technology is introduced. By using this technology, the first terminal device can perform SL communication with the second terminal device through a relay device. The technology includes: a manner of using layer (layer, L) 2 relay (L2 UE to UE Relay for short), and another manner of using L3 relay (L3 UE to UE Relay for short).

Currently, when the first terminal device and the second terminal device perform data transmission through the relay device, security protection is performed on data transmitted between the first terminal device and the second terminal device by using corresponding PDCP entities. However, currently, when security protection is performed on the data transmitted between the first terminal device and the second terminal device by using the corresponding PDCP entities, a security protection error is prone to occurrence. Consequently, the first terminal device cannot perform SL communication with the second terminal device through the relay device.

### SUMMARY

Embodiments of this application provide a relay communication method, apparatus, and system, to ensure correctness of security protection in a process in which a first terminal device communicates with a second terminal device through a relay device.

According to a first aspect, an embodiment of this application provides a relay communication method. In the method, a first terminal device and a second terminal device perform data transmission through a relay device. The method may be applied to the relay device, or may be applied to some components of the relay device, for example, a chip that is integrated with a processing function and that is in the relay device. The following describes the method by using an example in which the method is applied to the relay device.

The method includes: The relay device receives a first identifier from the first terminal device, where the first identifier indicates a first security protection parameter, the first security protection parameter is used for security protection of first data, and the first data is data transmitted between a first packet data convergence protocol PDCP entity of the first terminal device and a second PDCP entity of the second terminal device; and the relay device sends a second identifier to the second terminal device based on the first identifier, where the second identifier indicates the first security protection parameter.

In the method, behavior of a relay device side is constrained, so that the security protection parameter indicated by the identifier sent by the relay device to the second terminal device is the same as a security protection parameter used by the first terminal device, and the PDCP entities corresponding to the first terminal device and the second terminal device may use the same security protection parameter to perform security protection on the data transmitted between the PDCP entities.

In a possible implementation, the first identifier further indicates a logical channel between the first terminal device and the relay device, and the second identifier further indicates a logical channel between the relay device and the second terminal device. For example, first information of the first identifier is the same as second information of the second identifier; or the first identifier is the same as the second identifier. For example, the first information includes a low bit of a first quantity of the first identifier, and the second information includes a low bit of a first quantity of the second identifier. For example, the first quantity may be, for example, 5.

In a possible implementation, the first identifier further indicates a logical channel for data transmission of the first PDCP entity between the first terminal device and the relay device, and the second identifier further indicates a logical channel for data transmission of the second PDCP entity between the relay device and the second terminal device. For example, first information of the first identifier is the same as second information of the second identifier; or the first identifier is the same as the second identifier. For example, the first information includes a low bit of a first quantity of the first identifier, and the second information includes a low bit of a first quantity of the second identifier. For example, the first quantity may be, for example, 5.

In this possible implementation, if a manner of indicating the security protection parameter is reused, a manner of allocating the second identifier by the relay device may be constrained, so that both the first identifier that is between the first terminal device and the relay device and that is allocated by the first terminal device and the second identifier that is between the relay device and the second terminal device and that is allocated by the relay device are associated with the same security protection parameter.

In a possible implementation, the first identifier includes an identifier of the logical channel between the first terminal device and the relay device, and the second identifier includes an identifier of the logical channel between the relay device and the second terminal device. In this possible implementation, the identifier of the logical channel may be reused to indicate the security protection parameter, and a manner of allocating the identifier of the logical channel by the relay device is constrained, so that both the identifier that is of the logical channel between the first terminal device and the relay device and that is allocated by the first terminal device and the identifier that is of the logical channel between the relay device and the second terminal device and that is allocated by the relay device are associated with the same security protection parameter.

In a possible implementation, the first identifier includes an identifier of the logical channel for data transmission of the first PDCP entity between the first terminal device and the relay device, and the second identifier includes an identifier of the logical channel for data transmission of the second PDCP entity between the relay device and the second terminal device.

In this possible implementation, the identifier of the logical channel may be reused to indicate the security protection parameter, and a manner of allocating the identifier of the logical channel by the relay device is constrained, so that both the identifier that is of the logical channel for data transmission of the first PDCP entity between the first terminal device and the relay device and that is allocated by the first terminal device and the identifier that is of the logical channel for data transmission of the second PDCP entity between the relay device and the second terminal device and that is allocated by the relay device are associated with the same security protection parameter.

In a possible implementation, that the relay device receives a first identifier from the first terminal device includes: The relay device receives a first radio link control bearer configuration from the first terminal device, where the first radio link control bearer configuration includes the first identifier.

Correspondingly, that the relay device sends a second identifier to the second terminal device based on the first identifier includes: The relay device sends a second radio link control bearer configuration to the second terminal device based on the first identifier, where the second radio link control bearer configuration information includes the second identifier.

In this possible implementation, if the manner of indicating the security protection parameter and a sending manner are reused, the manner of allocating the second identifier by the relay device may be constrained, so that both the first identifier that is between the first terminal device and the relay device and that is allocated by the first terminal device and the second identifier that is between the relay device and the second terminal device and that is allocated by the relay device are associated with the same security protection parameter.

According to a second aspect, an embodiment of this application provides a relay communication method. In the method, a first terminal device and a second terminal device perform data transmission through a relay device. The method may be applied to the first terminal device, or may be applied to some components of the first terminal device, for example, a chip that is integrated with a processing function and that is in the first terminal device. The following describes the method by using an example in which the method is applied to the first terminal device.

The method includes: The first terminal device determines a first identifier, where the first identifier indicates a first security protection parameter, the first security protection parameter is used for security protection of first data, and the first data is data transmitted between a first packet data convergence protocol PDCP entity of the first terminal device and a second PDCP entity of the second terminal device; and
the first terminal device sends the first identifier to the second terminal device by using the relay device, for example, the first terminal device sends a radio bearer RB configuration to the second terminal device by using the relay device, where the RB configuration includes the first identifier and a PDCP entity configuration; or the RB configuration includes the PDCP entity configuration, and the PDCP entity configuration includes the first identifier.

In a possible implementation, the first PDCP entity of the first terminal device and the second PDCP entity of the second terminal device perform data transmission through a first logical channel, and the first logical channel is a logical channel between the first terminal device and the relay device.

In the method, another parameter that is in the RB configuration and that is not changed by the relay device indicates the security protection parameter, so that the PDCP entities corresponding to the first terminal device and the second terminal device may use the same security protection parameter to perform security protection on the data transmitted between the PDCP entities.

In a possible implementation, the bearer RB configuration is associated with a sidelink bearer SLRB configuration. For example, the bearer RB configuration is the sidelink bearer SLRB configuration, or indicates the sidelink bearer SLRB configuration. In this possible implementation, when the first terminal device and the second terminal device perform data transmission on an SL through the relay device, the PDCP entities corresponding to the first terminal device and the second terminal device may use the same security protection parameter, to ensure correctness and effectiveness of SL security protection, so that SL communication can be appropriately performed.

In a possible implementation, the first identifier is an identifier of the logical channel between the first terminal device and the relay device, or the first identifier is not an identifier of the logical channel between the first terminal device and the terminal device. For example, first information of the first identifier is associated with the first security protection parameter; or the first identifier is associated with the first security protection parameter. For example, the first information includes a low bit of a first quantity of the first identifier.

In a possible implementation, the first identifier is an identifier of the first logical channel. For example, the first information of the first identifier is associated with the first security protection parameter; or the first identifier is associated with the first security protection parameter. For example, the first information includes a low bit of a first quantity of the first identifier.

In a possible implementation, the first identifier is an identifier of a second logical channel, the first logical channel and the second logical channel are different logical channels, and the second logical channel is also a logical channel between the first terminal device and the relay device.

In this possible implementation, the identifier indicating the security protection parameter may be reused, and a sending manner of the identifier is changed, so that the identifier is not changed by the relay device. In this way, both the first terminal device and the second terminal device are associated with the same security protection parameter, and the PDCP entities corresponding to the first terminal device and the second terminal device may use the same security protection parameter.

In a possible implementation, the first identifier is associated with any one of the following: an identifier of the RB configuration and an identifier of an RB. For example, the first identifier includes the identifier of the RB configuration, third information of the identifier of the RB configuration, the identifier of the RB, or fourth information of the identifier of the RB. For example, the third information includes a bit of a second quantity of the identifier of the RB configuration, or the third information includes a result obtained by performing an operation on the identifier of the RB configuration. For example, the fourth information includes a bit of a third quantity of the identifier of the RB, or the third information includes a result obtained by performing an operation on the identifier of the RB.

In this possible implementation, another parameter that is not changed by the relay device may indicate the security protection parameter, so that the PDCP entities corresponding to the first terminal device and the second terminal device may use the same security protection parameter to perform security protection on the data transmitted between the PDCP entities.

According to a third aspect, an embodiment of this application provides a relay communication method. In the method, a first terminal device and a second terminal device perform data transmission through a relay device. The method may be applied to the second terminal device, or may be applied to some components of the second terminal device, for example, a chip that is integrated with a processing function and that is in the second terminal device. The following describes the method by using an example in which the method is applied to the second terminal device.

The method includes: The second terminal device receives a second identifier from the relay device, where the second identifier indicates a first security protection parameter, the first security protection parameter is used for security protection of first data, and the first data is data transmitted between a first packet data convergence protocol PDCP entity of the first terminal device and a second PDCP entity of the second terminal device;
the second terminal device receives a PDCP entity configuration from the first terminal device by using the relay device;
the second terminal device establishes the second PDCP entity based on the PDCP entity configuration; and
when the first data is transmitted between the second PDCP entity of the second terminal device and the first PDCP entity of the first terminal device through the relay device, security protection is performed on the first data by using the first security protection parameter.

In a possible implementation, the second identifier further indicates a logical channel between the relay device and the second terminal device.

In a possible implementation, the second identifier further indicates a logical channel for data transmission of the second PDCP entity between the relay device and the second terminal device.

In a possible implementation, second information of the second identifier is associated with the first security protection parameter; or the second identifier is associated with the first security protection parameter.

In a possible implementation, the second information includes a low bit of a first quantity of the second identifier. In this possible implementation, if a manner of indicating the security protection parameter is reused, a manner of allocating the second identifier by the relay device may be constrained, so that the PDCP entities corresponding to the first terminal device and the second terminal device may use the same security protection parameter to perform security protection on the data transmitted between the PDCP entities.

In a possible implementation, the second identifier includes an identifier of the logical channel between the relay device and the second terminal device.

In a possible implementation, that the second terminal device receives a second identifier from the relay device includes: The second terminal device receives a second radio link control bearer configuration from the relay device, where the second radio link control bearer configuration includes the second identifier.

For beneficial effect of the relay communication method according to the third aspect and the possible implementations of the third aspect, refer to beneficial effect brought by the first aspect and the possible implementations of the first aspect. Details are not described herein again.

According to a fourth aspect, an embodiment of this application provides a relay communication method. In the method, a first terminal device and a second terminal device perform data transmission through a relay device. The method may be applied to the second terminal device, or may be applied to some components of the second terminal device, for example, a chip that is integrated with a processing function and that is in the second terminal device. The following describes the method by using an example in which the method is applied to the second terminal device.

The method includes: The second terminal device receives a radio bearer RB configuration from the first terminal device by using the relay device, where the RB configuration includes a first identifier and a PDCP entity configuration; or the RB configuration includes the PDCP entity configuration, and the PDCP entity configuration includes a first identifier; the first identifier indicates a first security protection parameter; and the first security protection parameter is used for security protection of first data, and the first data is data transmitted between a first packet data convergence protocol PDCP entity of the first terminal device and a second PDCP entity of the second terminal device;
the second terminal device establishes the second PDCP entity based on the PDCP entity configuration; and
when the first data is transmitted between the second PDCP entity of the second terminal device and the first PDCP entity of the first terminal device through the relay device, security protection is performed on the first data by using the first security protection parameter.

In a possible implementation, the first PDCP entity of the first terminal device and the second PDCP entity of the second terminal device perform data transmission through a first logical channel, and the first logical channel is a logical channel between the first terminal device and the relay device.

In a possible implementation, the bearer RB configuration is associated with a sidelink bearer SLRB configuration. For example, the bearer RB configuration is the sidelink bearer SLRB configuration, or indicates the sidelink bearer SLRB configuration.

In a possible implementation, the first identifier is an identifier of the logical channel between the first terminal device and the relay device, or the first identifier is not an identifier of the logical channel between the first terminal device and the terminal device.

In a possible implementation, the first identifier is an identifier of the first logical channel.

In a possible implementation, the first identifier is an identifier of a second logical channel, the first logical channel and the second logical channel are different logical channels, and the second logical channel is also a logical channel between the first terminal device and the relay device.

In a possible implementation, first information of the first identifier is associated with the first security protection parameter; or the first identifier is associated with the first security protection parameter.

In a possible implementation, the first information includes a low bit of a first quantity of the first identifier.

In a possible implementation, the first identifier is associated with any one of the following: an identifier of the RB configuration and an identifier of an RB. For example, the first identifier includes the identifier of the RB configuration, third information of the identifier of the RB configuration, the identifier of the RB, or fourth information of the identifier of the RB. For example, the third information includes a bit of a second quantity of the identifier of the RB configuration, or the third information includes a result obtained by performing an operation on the identifier of the RB configuration. For example, the fourth information includes a bit of a third quantity of the identifier of the RB, or the third information includes a result obtained by performing an operation on the identifier of the RB.

For beneficial effect of the relay communication method according to the fourth aspect and the possible implementations of the fourth aspect, refer to beneficial effect brought by the second aspect and the possible implementations of the second aspect. Details are not described herein again.

According to a fifth aspect, an embodiment of this application provides a relay communication apparatus. The relay communication apparatus includes units configured to implement the method according to the first aspect and the possible implementations of the first aspect. For beneficial effect of the relay communication apparatus, refer to the beneficial effect brought by the first aspect and the possible implementations of the first aspect. Details are not described herein again.

According to a sixth aspect, an embodiment of this application provides a communication apparatus. The communication apparatus includes units configured to implement the method according to the second aspect and the possible implementations of the second aspect. For beneficial effect of the communication apparatus, refer to the beneficial effect brought by the second aspect and the possible implementations of the second aspect. Details are not described herein again.

According to a seventh aspect, an embodiment of this application provides a communication apparatus. The communication apparatus includes units configured to implement the method according to the third aspect and the possible implementations of the third aspect. For beneficial effect of the communication apparatus, refer to the beneficial effect brought by the first aspect and the possible implementations of the first aspect. Details are not described herein again.

According to an eighth aspect, an embodiment of this application provides a communication apparatus. The communication apparatus includes units configured to implement the method according to the fourth aspect and the possible implementations of the fourth aspect. For beneficial effect of the communication apparatus, refer to the beneficial effect brought by the second aspect and the possible implementations of the second aspect. Details are not described herein again.

According to a ninth aspect, an embodiment of this application provides a relay communication apparatus. The relay communication apparatus includes a processor and a memory. The processor is coupled to the memory, the memory is configured to store a program or instructions, and when the program or the instructions are executed by the processor, the relay communication apparatus is enabled to perform the method described in any possible implementation of the first aspect.

According to a tenth aspect, an embodiment of this application provides a communication apparatus. The relay communication apparatus includes a processor and a memory.

The processor is coupled to the memory, the memory is configured to store a program or instructions, and when the program or the instructions are executed by the processor, the communication apparatus is enabled to perform the method described in any possible implementation of the second aspect.

According to an eleventh aspect, an embodiment of this application provides a communication apparatus. The relay communication apparatus includes a processor and a memory.

The processor is coupled to the memory, the memory is configured to store a program or instructions, and when the program or the instructions are executed by the processor, the communication apparatus is enabled to perform the method described in any possible implementation of the third aspect.

According to a twelfth aspect, an embodiment of this application provides a communication apparatus. The relay communication apparatus includes a processor and a memory.

The processor is coupled to the memory, the memory is configured to store a program or instructions, and when the program or the instructions are executed by the processor, the communication apparatus is enabled to perform the method described in any possible implementation of the fourth aspect.

According to a thirteenth aspect, a relay communication apparatus is provided, including a processor. The processor may implement the method according to any one of the possible implementations of the first aspect. Optionally, the relay communication apparatus further includes a memory. The processor is coupled to the memory, and may be configured to execute instructions in the memory, to implement the method according to any one of the possible implementations of the first aspect. Optionally, the relay communication apparatus further includes a communication interface, and the processor is coupled to the communication interface. In this embodiment of this application, the communication interface may be a transceiver, a pin, a circuit, a bus, a module, or a communication interface of another type. This is not limited.

In an implementation, the relay communication apparatus is a relay device. When the relay communication apparatus is the relay device, the communication interface may be a transceiver or an input/output interface.

In another implementation, the relay communication apparatus is a chip configured in a relay device. When the relay communication apparatus is the chip configured in the relay device, the communication interface may be an input/output interface.

Optionally, the transceiver may be a transceiver circuit. Optionally, the input/output interface may be an input/output circuit.

According to a fourteenth aspect, a communication apparatus is provided, including a processor. The processor may implement the method according to any one of the possible implementations of the second aspect. Optionally, the communication apparatus further includes a memory. The processor is coupled to the memory, and may be configured to execute instructions in the memory, to implement the method according to any one of the possible implementations of the second aspect. Optionally, the communication apparatus further includes a communication interface, and the processor is coupled to the communication interface. In this embodiment of this application, the communication interface may be a transceiver, a pin, a circuit, a bus, a module, or a communication interface of another type. This is not limited.

In an implementation, the communication apparatus is a first terminal device. When the communication apparatus is the first terminal device, the communication interface may be a transceiver or an input/output interface.

In another implementation, the communication apparatus is a chip configured in a first terminal device. When the communication apparatus is the chip configured in the first terminal device, the communication interface may be an input/output interface.

Optionally, the transceiver may be a transceiver circuit. Optionally, the input/output interface may be an input/output circuit.

According to a fifteenth aspect, a communication apparatus is provided, including a processor. The processor may implement the method according to any one of the possible implementations of the third aspect to the fourth aspect. Optionally, the communication apparatus further includes a memory. The processor is coupled to the memory, and may be configured to execute instructions in the memory, to implement the method according to any one of the possible implementations of the third aspect to the fourth aspect. Optionally, the communication apparatus further includes a communication interface, and the processor is coupled to the communication interface. In this embodiment of this application, the communication interface may be a transceiver, a pin, a circuit, a bus, a module, or a communication interface of another type. This is not limited.

In an implementation, the communication apparatus is a second terminal device. When the communication apparatus is the second terminal device, the communication interface may be a transceiver or an input/output interface.

In another implementation, the communication apparatus is a chip configured in a second terminal device. When the communication apparatus is the chip configured in the second terminal device, the communication interface may be an input/output interface.

Optionally, the transceiver may be a transceiver circuit. Optionally, the input/output interface may be an input/output circuit.

According to a sixteenth aspect, a processor is provided, including an input circuit, an output circuit, and a processing circuit. The processing circuit is configured to receive a signal by using the input circuit, and transmit a signal by using the output circuit, to enable the processor to perform the method according to any one of the possible implementations of the first aspect to the fourth aspect.

In a specific implementation process, the processor may be one or more chips. The input circuit may be an input pin. The output circuit may be an output pin. The processing circuit may be a transistor, a gate circuit, a trigger, any logic circuit, or the like. An input signal received by the input circuit may be, for example, but not limited to, received and input by a receiver, a signal output by the output circuit may be, for example, but not limited to, output to a transmitter and transmitted by the transmitter, and the input circuit and the output circuit may be a same circuit, where the circuit is used as the input circuit and the output circuit at different moments. Specific implementations of the processor and the various circuits are not limited in this embodiment of this application.

According to a seventeenth aspect, an embodiment of this application provides a chip. The chip stores a computer program, and when the computer program is executed by the chip, the method described in any one of the first aspect to the fourth aspect is implemented.

According to an eighteenth aspect, an embodiment of this application provides a chip, including at least one processor and a communication interface, where the communication interface is configured to receive a signal input to the chip or a signal output from the chip, and the processor communicates with the communication interface and is configured to implement the method described in any one of the first aspect to the fourth aspect by using a logic circuit or by executing code instructions.

According to a nineteenth aspect, an embodiment of this application provides a relay communication apparatus, including a unit, a module, or a circuit that is configured to perform the method according to the first aspect or the possible implementations of the first aspect. The relay communication apparatus may be a relay device, or may be a module used in a relay device, for example, may be a chip used in the relay device.

According to a twentieth aspect, an embodiment of this application provides a communication apparatus, including a unit, a module, or a circuit that is configured to perform the method according to the second aspect or the possible implementations of the second aspect. The relay communication apparatus may be a first terminal device, or may be a module used in a first terminal device, for example, may be a chip used in the first terminal device.

According to a twenty-first aspect, an embodiment of this application provides a communication apparatus, including a unit, a module, or a circuit configured to perform the method according to the third aspect or the possible implementations of the third aspect, or the method according to the fourth aspect or the possible implementations of the fourth aspect. The relay communication apparatus may be a second terminal device, or may be a module used in a second terminal device, for example, may be a chip used in the second terminal device.

According to a twenty-second aspect, an embodiment of this application provides a relay communication system. The relay communication system may include a first terminal device, a relay device that implements the method described in any possible implementation of the first aspect, and a second terminal device that implements the method described in any possible implementation of the third aspect; or a relay device, a first terminal device that implements the method described in any possible implementation of the second aspect, and a second terminal device that implements the method described in any possible implementation of the fourth aspect.

According to a twenty-third aspect, an embodiment of this application provides a computer-readable storage medium. The computer-readable storage medium stores a computer program or instructions, and when the computer program or the instructions are executed, a computer is enabled to perform the method described in any one of the first aspect to the fourth aspect.

According to a twenty-fourth aspect, an embodiment of this application provides a computer program product. When the computer program product runs on a computer, the computer is enabled to perform the method described in any one of the first aspect to the fourth aspect.

According to a twenty-fifth aspect, an embodiment of this application provides a computer program product including instructions. When the computer program product runs on a computer, the computer is enabled to perform the method described in any one of the first aspect to the fourth aspect.

According to a twenty-sixth aspect, a computer program product is provided. The computer program product includes a computer program (which may also be referred to as code or instructions). When the computer program is run, a computer is enabled to perform the method according to the first aspect or the second aspect and any one of the possible implementations of the first aspect or the second aspect.

### BRIEF DESCRIPTION OF DRAWINGS

FIG. 1 is a schematic diagram of an application scenario according to an embodiment of this application;
FIG. 2 is a schematic diagram of an architecture of a possible control plane protocol stack of L2 UE to UE Relay;
FIG. 3 is a schematic diagram of an architecture of a possible user plane protocol stack of L2 UE to UE Relay;
FIG. 4 is a schematic flowchart of a possible SLRB configuration between a first terminal device and a second terminal device;
FIG. 5 is a schematic diagram of possible data transmission of L2 UE to UE Relay;
FIG. 6 is a schematic flowchart of a communication method according to an embodiment of this application;
FIG. 7 is a schematic flowchart of another communication method according to an embodiment of this application;
FIG. 8 is a schematic diagram of a structure of a relay communication apparatus according to an embodiment of this application;
FIG. 9 is a schematic diagram of a structure of a communication apparatus according to an embodiment of this application;
FIG. 10 is a schematic diagram of a structure of another communication apparatus according to an embodiment of this application;
FIG. 11 is a schematic diagram of a structure of still another communication apparatus according to an embodiment of this application; and
FIG. 12 is a schematic diagram of a structure of still another communication apparatus according to an embodiment of this application.

### DESCRIPTION OF EMBODIMENTS

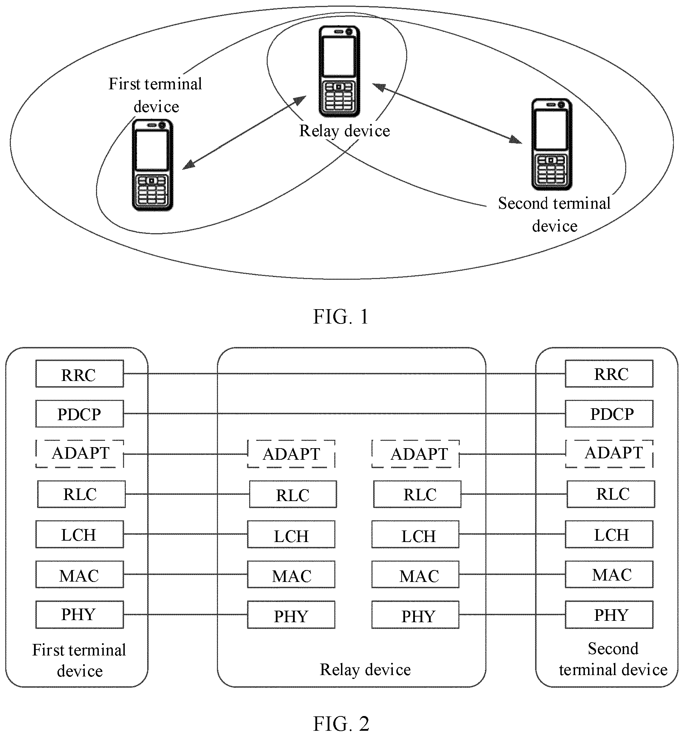

FIG. 1 is a schematic diagram of an application scenario according to an embodiment of this application. As shown in FIG. 1, a relay communication system includes a first terminal device, a second terminal device, and a relay device. The first terminal device and the second terminal device perform data transmission through the relay device. Quantities of first terminal devices, second terminal devices, and relay devices included in the relay communication system are not limited in this embodiment of this application. In addition, it should be understood that FIG. 1 is merely a schematic diagram. The relay communication system may further include another network device. This is not limited in this application, and is not shown in FIG. 1.

The relay device may be generally a terminal device or a radio access network device.

The radio access network device is generally an access device that a terminal device accesses in the communication system in a wireless manner, or a radio access network (radio access network, RAN) node (or device) that connects a terminal device to a wireless network, or may be an evolved NodeB (evolved NodeB, eNB), a radio network controller (Radio Network Controller, RNC), a NodeB (NodeB, NB), a base station controller (Base Station Controller, BSC), a base transceiver station (Base Transceiver Station, BTS), a home base station (for example, a home evolved NodeB, or a home NodeB, HNB), or a baseband unit (BaseBand Unit, BBU), an access point (Access Point, AP) in a wireless fidelity (Wireless Fidelity, Wi-Fi) system, a wireless relay node, a wireless backhaul node, a transmission point (transmission point, TP), a transmission and reception point (transmission and reception point, TRP), or the like, or may be a network device or a transmission point (TRP or TP) in a 5G (for example, NR) system, or one or a group of (including a plurality of antenna panels) antenna panels of a base station in a 5G system, or may be a network node that forms a network device or a transmission point, for example, a baseband unit (BBU), a distributed unit (distributed unit, DU), or the like. A specific technology and a specific device form used by the radio access network device are not limited in embodiments of this application. In embodiments of this application, the radio access network device may also be briefly referred to as a network device or a base station. If there is no particular description, all network devices in embodiments of this application are referred to as radio access network devices.

The terminal device is generally a device that provides voice and/or data connectivity for a user, and may also be referred to as a terminal (Terminal), user equipment (user equipment, UE), a mobile station (mobile station, MS), a mobile terminal (mobile terminal, MT), or the like. The terminal device may be a mobile phone (mobile phone), a tablet computer (Pad), a computer with a wireless transceiver function, a virtual reality (Virtual Reality, VR) terminal device, an augmented reality (Augmented Reality, AR) terminal device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The radio access network device and the terminal device may be deployed on land including indoors or outdoors in a handheld or vehicle-mounted manner, or may be deployed on water, or may be deployed in the air on an airplane, a balloon, an artificial satellite or the like. The terminal device may be located at a fixed position, or may be mobile.

Communication between the radio access network device and the terminal device and communication between terminal devices may be performed by using a licensed spectrum (licensed spectrum), may be performed by using an unlicensed spectrum (unlicensed spectrum), or may be performed by using both a licensed spectrum and an unlicensed spectrum. Communication between the radio access network device and the terminal device and communication between terminal devices may be performed by using a spectrum below 6 gigahertz (gigahertz, GHz), may be performed by using a spectrum above 6 GHz, or may be performed by using both a spectrum below 6 GHz and a spectrum above 6 GHz. A spectrum resource used between the radio access network device and the terminal device is not limited in embodiments of this application.

It should be understood that the relay communication system shown in FIG. 1 may be, for example, an LTE communication system, a 5G communication system, a next-generation wireless local area network system, another future communication system, or the like. This is not limited herein. In addition, in this embodiment of this application, terms 5G and new radio (new radio, NR) may be equivalent.

Still refer to FIG. 1. An NR communication system is used as an example. An NR communication architecture includes two types of communication interfaces: a PC5 interface and a Uu interface. Therefore, two terminal devices may communicate with each other through the two types of interfaces. One terminal device may be referred to as the first terminal device, and the other terminal device may be referred to as the second terminal device. This is not distinguished in this embodiment of this application.

Specifically, the Uu interface is a communication interface between the terminal device and the network device. Through the Uu interface, the first terminal device may forward data to the second terminal device through the network device. The network device that receives the data from the first terminal device and the network device that forwards the data to the second terminal device may be a same network device, or may be different network devices. FIG. 1 is a schematic diagram using the same network device as an example.

The PC5 interface is a direct communication interface between terminal devices. To be specific, the PC5 interface may be used to perform direct communication between the terminal devices through a direct communication link by using a resource configured by the network device, without forwarding through the network device. The direct communication link may also be referred to as a sidelink or a sidelink (sidelink, SL). The direct communication between the terminal devices through the direct communication link may also be referred to as SL communication. The SL communication may support a vehicle to everything (vehicle to everything, V2X) service, or may support another service. In other words, an application scenario of the SL is not limited to V2X. In addition, the SL communication supports three communication manners: unicast, multicast, and broadcast.

Still refer to FIG. 1. To further enhance a coverage capability of the SL, a U2U Relay technology is introduced. By using this technology, the first terminal device can perform SL communication with the second terminal device through the relay device. In other words, communication is performed between the first terminal device and the relay device, and between the relay device and the second terminal device through the SL. For example, the technology may be applied to a scenario in which a coverage signal between the first terminal device and the second terminal device is poor, a scenario in which the first terminal device and the second terminal device are located outside a coverage area, or a scenario in which a capacity between the first terminal device and the second terminal device is increased (for example, communication is performed through a relay device with a strong transmission capability).

In this scenario, the first terminal device may also be referred to as a source UE (source UE), and the second terminal device may be referred to as a target UE (target UE). This is not distinguished in this embodiment of this application. The relay device may be any terminal device that can communicate with the first terminal device and the second terminal device.

The first terminal device, the second terminal device, and the relay device may be in any one of the following states: an out of coverage (out of coverage, OOC) state, a radio resource control (radio resource control, RRC) idle state, an RRC inactive state, and an RRC connected state. The three devices may be in a same state or different states. This is not limited in this embodiment of this application.

UE to UE Relay includes two relay manners: a manner of using L2 relay (L2 UE to UE Relay for short), and another manner of using L3 relay (L3 UE to UE Relay for short). The L2 UE to UE Relay means that a relay device forwards data below a PDCP layer, or in other words, a new layer is introduced between a PDCP layer and an RLC layer for data forwarding. For example, a new protocol layer (an adaptation (adaption, ADAPT) layer) is introduced between the RLC layer and the PDCP layer, to forward data between the first terminal device and the second terminal device through the layer. In other words, when the relay device forwards data, the relay device is unaware of the PDCP layer, that is, the relay device processes data related to the PDCP layer in a transparent transmission manner.

An example in which the ADAPT layer is introduced between the RLC layer and the PDCP layer is used to describe a protocol layer used when the data between the first terminal device and the second terminal device is transmitted by using the L2 UE to UE Relay.

FIG. 2 is a schematic diagram of an architecture of a possible control plane protocol stack of L2 UE to UE Relay. As shown in FIG. 2, when the first terminal device performs SL communication with the second terminal device through the relay device, transmission of control plane-related data may be related to the following protocol layers: a radio resource control (radio resource control, RRC) layer, a packet data convergence protocol (packet data convergence protocol, PDCP) layer, an adaptation (adaption, ADAPT) layer, a radio link control (radio link control, RLC) layer, a logical channel (logical channel, LCH), a medium access control (medium access control, MAC) layer, and a physical (physical, PHY) layer.

RRC layer: Be configured to perform broadcast, paging, RRC link establishment, radio bearer (radio bearer, RB) control, mobility, terminal device measurement reporting control, and the like.

PDCP layer: There may be a plurality of PDCP entities at the PDCP layer. Each PDCP entity carries data of one RB, and may provide services such as security, header compression, encryption, and handover.

ADAPT layer: Be configured to perform bearer mapping and carry identification information of the first terminal device and/or the second terminal device.

RLC layer: There may be a plurality of RLC entities at the RLC layer. Each RLC entity corresponds to one PDCP entity, and is configured to provide services such as segmentation, reassembly, and retransmission for the PDCP entity.

LCH: Each logical channel corresponds to one PDCP entity and is used to transmit data of the PDCP entity.

MAC layer: Provide transmission services for data on logical channels, such as scheduling and hybrid automatic repeat request (hybrid automatic repeat request, HARQ) acknowledgment and negative acknowledgment.

PHY layer: Encode and transmit data transmitted at a MAC layer.

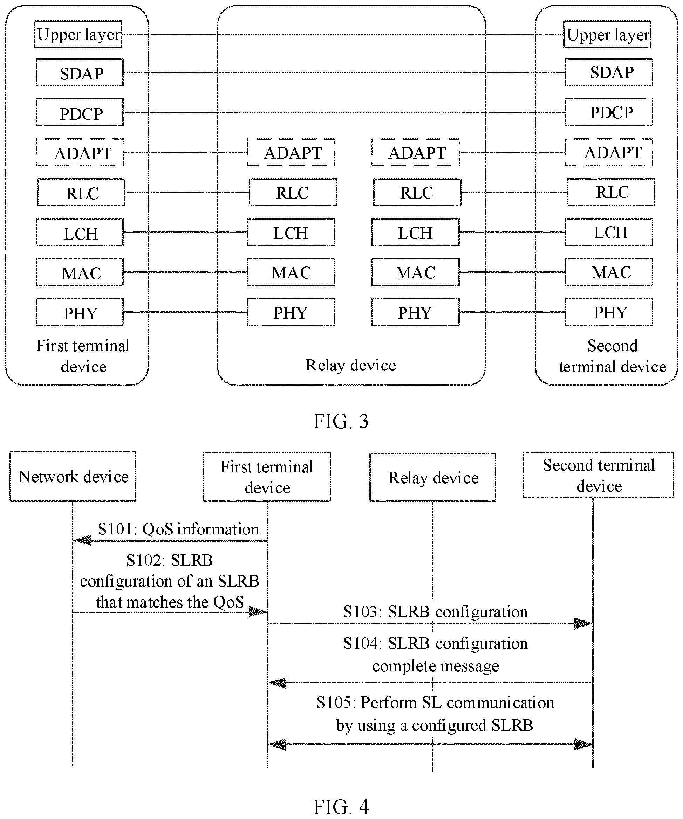

FIG. 3 is a schematic diagram of an architecture of a possible user plane protocol stack of L2 UE to UE Relay. As shown in FIG. 3, when the first terminal device performs SL communication with the second terminal device through the relay device, transmission of user plane-related data may be related to the following protocol layers: an upper layer (upper layer), a service data adaptation protocol (service data adaptation protocol, SDAP) layer, an RRC layer, a PDCP layer, an ADAPT layer, an RLC layer, an LCH, a MAC layer, and a PHY layer.

Upper layer (upper layer): Be generally a layer located above an access stratum (access stratum, AS), for example, may be a V2X layer or a PC5-S layer. The AS herein generally includes one or more of an RRC layer, an SDAP layer, a PDCP layer, an RLC layer, a MAC layer, and a PHY layer.

Service data adaptation protocol (service data adaptation protocol, SDAP) layer: Be responsible for mapping each quality of service flow (quality of service flow, QoS flow) from a 5 generation core (5 generation core, 5GC) network to a data radio bearer (data radio bearer, DRB), that is, transmitting, on a corresponding DRB based on a service attribute corresponding to a QoS flow, a data packet corresponding to the QoS flow.

For descriptions of other layers, refer to the foregoing descriptions about these layers.

It should be understood that the protocol layers in FIG. 2 and FIG. 3 may also be collectively referred to as a radio access stratum, a wireless network protocol layer, a wireless protocol layer, a wireless air interface protocol layer, or a radio access stratum protocol layer. This is not distinguished in this embodiment of this application.

It can be learned from FIG. 2 and FIG. 4 that in an L2 UE to UE Relay scenario, when the first terminal device performs SL communication with the second terminal device through the relay device, PDCP entities are end-to-end corresponding. For example, the first terminal device has a PDCP entity 1, and the second terminal device has a PDCP entity 2 corresponding to the PDCP entity 1. In other words, the PDCP entity 1 and the PDCP entity 2 are a pair of PDCP entities.

For example, the PDCP entity 1 is configured to send data to the second terminal device, and the PDCP entity 2 is configured to receive the data from the first terminal device. In this example, the PDCP entity 1 may also be referred to as a transmitting PDCP entity 1, and the PDCP entity 2 may be referred to as a receiving PDCP entity 2. Alternatively, the PDCP entity 2 is configured to send data to the first terminal device, and the PDCP entity 1 is configured to receive the data from the second terminal device. In this example, the PDCP entity 2 may also be referred to as a transmitting PDCP entity 2, and the PDCP entity 1 may be referred to as a receiving PDCP entity 1.

In a possible implementation, the L2 UE to UE Relay supports three communication manners: unicast, multicast, and broadcast. The SL communication is used as an example. For unicast, a unicast connection may be first established between the first terminal device and the second terminal device by using the relay device, and then the first terminal device and the second terminal device may configure a sidelink radio bearer (sidelink radio bearer, SLRB). In this way, the first terminal device and the second terminal device may perform data transmission through the relay device by using the configured SLRB. The configured SLRB may be used to transmit data that is sent by the first terminal device to the second terminal device, and/or used to transmit data that is sent by the second terminal device to the first terminal device. In some embodiments, when the first terminal device sends the data to the second terminal device, the first terminal device may also be referred to as a sending device, and the second terminal device may also be referred to as a receiving device. When the second terminal device sends the data to the first terminal device, the second terminal device may also be referred to as a sending device, and the first terminal device may also be referred to as a receiving device.

There are two types of SLRB configurations described herein. One is an SLRB configuration for configuring a side link-signaling radio bearer (side link-signaling radio bearer, SL-SRB), and the other is an SLRB configuration for configuring a side link-data radio bearer (side link-data radio bearer, SL-DRB).

The "SLRB configuration for configuring an SL-SRB" is predefined in the protocol. The following focuses on the "SLRB configuration for configuring an SL-DRB". For ease of description, the "SLRB configuration for configuring an SL-DRB" is referred to as an SLRB configuration for short in the following. That is, in the following embodiments, descriptions of the SLRB configuration are all referred to as "an SLRB configuration for configuring an SL-DRB". Details are not described herein again.

Currently, after obtaining the SLRB configuration from a network device side, the first terminal device configures, for the second terminal device by using the relay device, a configuration parameter related to transmission (that is, sending and receiving) in the SLRB configuration. How the first terminal device obtains the SLRB configuration from the network device side is not limited in this embodiment of this application. For example, the first terminal device may obtain the SLRB configuration from the network device side by using, for example, radio resource control (radio resource control, RRC) dedicated signaling or a system information block (system information block, SIB) message, or may obtain the SLRB configuration from the network device side by using a preconfigured message.

In a possible implementation, FIG. 4 is a schematic flowchart of a possible SLRB configuration between a first terminal device and a second terminal device. As shown in FIG. 4, when the first terminal device and the second terminal device are in the RRC connected state, the SLRB may be configured in the following manners.

S101: The first terminal device reports QoS information to the network device.

Correspondingly, the network device receives the quality of service (Quality of Service, QoS) information.

S102: The network device sends, to the first terminal device, an SLRB configuration of an SLRB that matches the QoS.

The foregoing steps S101 and S102 are optional steps.

For example, the first terminal device may report the QoS information by using a sidelink user equipment information (sidelink user equipment information, SUI) message. Correspondingly, the network device may determine, based on the QoS information, the SLRB that matches the QoS information, and send, to the first terminal device by using the RRC dedicated signaling, the SLRB configuration corresponding to the SLRB. The SLRB matches the QoS information. In other words, the SLRB has a mapping relationship with the QoS information, or the SLRB is in a one-to-one correspondence with the QoS information, or the SLRB is associated with the QoS information, or the like.

S103: The first terminal device sends the SLRB configuration to the second terminal device by using the relay device.

For example, the SLRB configuration used by the first terminal device to interact with the second terminal device on the SL by using the relay device includes one or more of the following: an SLRB configuration index (index), an SDAP entity configuration, a PDCP entity configuration, and an RLC bearer configuration (for example, an RLC-BearerConfig). The RLC bearer configuration includes an RLC entity configuration and an LCH configuration, and the LCH configuration includes a logical channel identifier (logical channel ID, LCID). That is, the LCID is a parameter of the LCH configuration.

S104: The second terminal device sends an SLRB configuration complete message to the first terminal device by using the relay device.

S105: The first terminal device performs SL communication with the second terminal device through the relay device by using the configured SLRB.

Currently, when unicast communication is performed between the first terminal device and the second terminal device in an L2 UE to UE Relay manner, security protection (for example, including integrity protection and check and/or encryption and decryption) at the AS is supported. A security protection algorithm in security protection and some input parameters of the algorithm are negotiated at the upper layer (the PC5-S layer or the V2X layer) in a unicast establishment process. After completing security negotiation, the upper layer submits the corresponding security protection algorithm and some input parameters of the algorithm to the AS. Subsequently, a PDCP entity that can provide a security service at the AS performs security protection at the AS.

That is, when performing security protection at the AS, the PDCP entity performs security protection based on a security protection algorithm corresponding to the PDCP entity and input parameters of the algorithm. The input parameters of the security protection algorithm may include, for example, a KEY (NRPIK), a KEY (NRPEK), a COUNT (count), a BEARER (bearer), a DIRECTION (direction), and other parameters.

In a possible implementation, input parameters for integrity protection and check may include, for example, a KEY (NRPIK), a COUNT, a BEARER, and a DIRECTION, and input parameters for encryption and decryption may include, for example, a KEY (NRPEK), a COUNT, a BEARER, and a DIRECTION.

A PCS encryption key (NRPEK) and a PC5 integrity key (NRPIK) are usually used for selected confidentiality and integrity algorithms. The KEY (NRPEK) and KEY (NRPIK) are usually derived based on a KNRP-sess and are usually automatically updated each time the KNRP-sess changes.

A length of the COUNT is usually 32 bits, and a value of the COUNT usually includes a hyper frame number (Hyper Frame Number, HFN) and a PDCP serial number (PDCP SN). A size (in a unit of bits) of the HFN is usually equal to 32 minus a length of the PDCP serial number (serial number, SN).

In a possible implementation, for a terminal device that sends a direct security command of a security context, a DIRECTION of direct link signaling sent by the terminal device is usually set to 1; otherwise, a DIRECTION is set to 0.

The BEARER parameter is determined based on an LCID in an LCH corresponding to the PDCP entity, or may be understood as that the BEARER parameter is determined based on an LCID in an LCH configuration associated with a PDCP entity configuration corresponding to the PDCP entity. For example, in an SL communication scenario, the BEARER is determined based on five low bits of the LCID, or the BEARER is associated with five low bits of the LCID. The five low bits of the LCID herein may be, for example, five least significant bits (least significant bits, LSBs) of the LCID.

That is, the LCID indicates a logical channel used when a transmit end sends data, and also indicates a security protection BEARER parameter of the AS in SL communication performed in a unicast manner.

Therefore, currently, when the first terminal device sends the SLRB configuration to the second terminal device by using the relay device, the following manner indicates, to the second terminal device, a BEARER parameter used when a PDCP entity of the second terminal device performs security protection on the data transmitted between the first terminal device and the second terminal device.

When sending a PDCP entity configuration to the second terminal device by using the relay device, the first terminal device further sends a PDCP entity configuration identifier (for example, a PDCP entity configuration index). Correspondingly, when sending an RLC bearer configuration to the second terminal device, the relay device also sends the PDCP entity configuration identifier. Alternatively, when sending a PDCP entity configuration to the second terminal device by using the relay device, the first terminal device further sends an SLRB configuration identifier (for example, an SLRB configuration index). Correspondingly, when sending an RLC bearer configuration to the second terminal device, the relay device also sends the SLRB configuration identifier.

In this way, the second terminal device may determine, by using the PDCP entity configuration identifier or the SLRB configuration identifier, that there is an association relationship between the received PDCP entity configuration and the RLC bearer configuration, or determine that there is an association relationship between the received PDCP entity configuration and an LCID in an LCH configuration in the RLC bearer configuration, to perform security protection on a PDCP entity established based on the PDCP entity configuration by using a BEARER parameter corresponding to the LCID.

Correspondingly, the first terminal device also establishes a PDCP entity by using the PDCP entity configuration sent by the first terminal device. Subsequently, PDCP entities corresponding to the first terminal device and the second terminal device may use the BEARER parameter corresponding to the LCID to perform security protection on the data transmitted between the first terminal device and the second terminal device. For example, after performing encryption processing on the data by using the BEARER parameter, the PDCP entity of the first terminal device sends the data to the second terminal device by using the relay device. Correspondingly, after receiving the data, the PDCP entity corresponding to the second terminal device performs decryption processing on the data by using the BEARER parameter.

However, currently, the SLRB configuration obtained by the first terminal device from the network device side does not include a parameter in the LCH configuration: an LCID, but is allocated by the transmit end that performs SL communication in a unicast manner. Corresponding to the L2 UE to UE Relay in this embodiment of this application, the first terminal device determines an LCID in an LCH configuration sent by the first terminal device to the relay device, and the relay device determines the LCID in the LCH configuration from the relay device to the second terminal device.

In this implementation, the second terminal device may obtain the RLC bearer configuration by using the relay device in the following manner.

The first terminal device sends an RLC bearer configuration 1 to the relay device, where an LCID in an LCH configuration in the RLC bearer configuration 1 is allocated by the first terminal device. Correspondingly, the relay device sends an RLC bearer configuration 2 to the second terminal device. An LCID in an LCH configuration in the RLC bearer configuration 2 is allocated by the relay device.

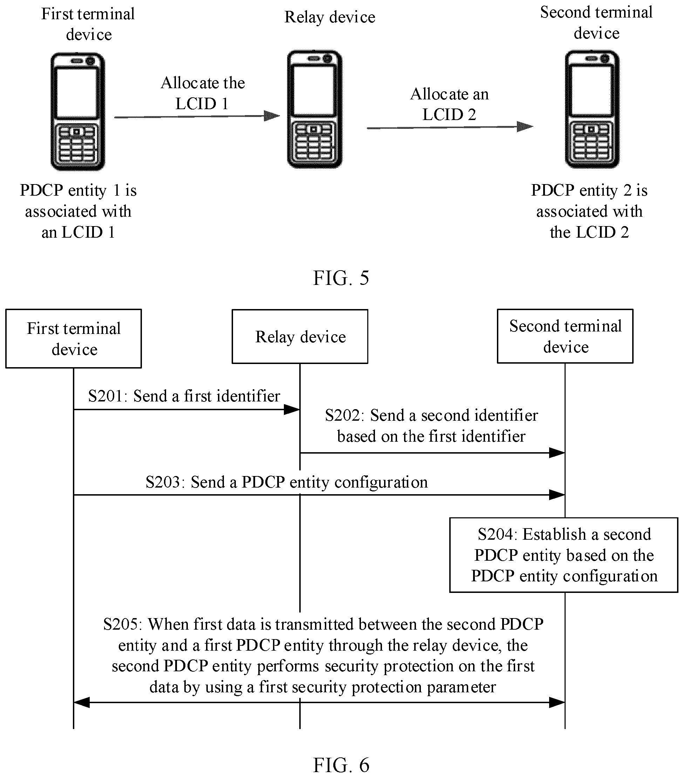

FIG. 5 is a schematic diagram of possible data transmission of L2 UE to UE Relay. An example in which the PDCP entity 1 of the first terminal device corresponds to the PDCP entity 2 of the second terminal device is used. The PDCP entity 1 is a sending PDCP entity, and the PDCP entity 2 is a receiving entity. As shown in FIG. 5, because a manner of allocating an LCID to a terminal device is not limited currently, an LCID that is allocated by the first terminal device and that is between the first terminal device and the relay device is an LCID 1, and an LCID that is allocated by the relay device and that is between the relay device and the second terminal device is an LCID 2, that is, different LCIDs are allocated.

In other words, the LCID associated with the PDCP entity 1 of the first terminal device may be different from the LCID associated with the PDCP entity of the second terminal device. Different LCIDs correspond to different BEARER parameters. Therefore, in the foregoing LCID allocation manner, the PDCP entity 1 and the PDCP entity 2 may use different BEARER parameters, causing a security protection error. For example, the BEARER parameter corresponding to the LCID associated with the PDCP entity of the second terminal device cannot be used to correctly decode data from the PDCP entity of the first terminal device. Consequently, the first terminal device cannot perform SL communication with the second terminal device through the relay device.

It is considered that the foregoing problem exists because the first terminal device and the second terminal device are not associated with a same BEARER parameter. Therefore, an embodiment of this application provides a relay communication method. In this way, a first terminal device and a second terminal device can be associated with a same security protection parameter when communicating with each other through a relay device, so that the first terminal device and the second terminal device can communicate with each other by using the same security protection parameter, thereby ensuring correctness and effectiveness of security protection during communication. Optionally, the security protection parameter in this embodiment of this application may include, for example, at least some input parameters required by an AS to execute a security protection algorithm, for example, the foregoing BEARER parameter.

It should be noted that the relay communication method provided in this embodiment of this application includes but is not limited to the foregoing L2 UE to UE Relay application scenario. The communication method provided in this application may be used to achieve similar technical effect in a scenario in which communication is performed by using the relay device and the protocol stacks shown in FIG. 2 and FIG. 3 are used, for example, a device to device (Device to Device, D2D) application scenario and a machine to machine (Machine to Machine, M2M) application scenario. Details are not described herein again. In addition, the relay device in the foregoing method includes but is not limited to the foregoing terminal devices, or may be another type of device, for example, a network device or the like. This is not limited in this embodiment of this application. Further, according to the relay communication method provided in this embodiment of this application, data transmission may be implemented between the first terminal device and the second terminal device through the relay device on an SL or another link, for example, a link established by using a Uu interface. Details are not described herein again.

In this embodiment of this application, when the first terminal device and the second terminal device perform data transmission through the relay device, the first terminal device and the second terminal device may be associated with the same security protection parameter in the following several manners.

Manner 1: Behavior of a relay device side is constrained, so that a security protection parameter indicated by an identifier sent by the relay device to the second terminal device is the same as a security protection parameter used by the first terminal device, and PDCP entities corresponding to the first terminal device and the second terminal device may use the same security protection parameter to perform security protection on data transmitted between the PDCP entities.

Manner 2: Behavior of a relay device side is not constrained, but another parameter that is in an SLRB configuration and that is not changed by the relay device indicates a security protection parameter, so that PDCP entities corresponding to the first terminal device and the second terminal device may use the same security protection parameter to perform security protection on data transmitted between the PDCP entities.

It should be noted that in this embodiment of this application, that the first terminal device and the second terminal device perform data transmission through the relay device may be that the first terminal device sends the data to the second terminal device by using the relay device, and/or the second terminal device sends the data to the first terminal device by using the relay device.

Some embodiments are used below to describe in detail technical solutions in embodiments of this application. The following several embodiments may be combined with each other, and a same or similar concept or process may not be described repeatedly in some embodiments.

FIG. 6 is a schematic flowchart of a communication method according to an embodiment of this application. As shown in FIG. 6, when the manner 1 is used, the method may include the following steps.

S201: The first terminal device sends a first identifier to the relay device.

Correspondingly, the relay device receives the first identifier from the first terminal device. The first identifier indicates a first security protection parameter. The first security protection parameter herein is used to perform security protection on first data. In other words, the first security protection parameter is used for security protection of the first data. The first data is data transmitted between a first PDCP entity of the first terminal device and a second PDCP entity of the second terminal device. Alternatively, the first identifier indicates a first security protection parameter used when a first PDCP entity of the first terminal device sends data to a second PDCP entity of the second terminal device. Alternatively, the first identifier indicates a first security protection parameter used when a second PDCP entity of the second terminal device sends data to a first PDCP entity of the first terminal device. Alternatively, the first identifier indicates a first security protection parameter used when a first PDCP entity of the first terminal device sends data to a second PDCP entity of the second terminal device and a first security protection parameter used when the second PDCP entity of the second terminal device sends data to the first PDCP entity of the first terminal device, or the like.

A manner of obtaining the first identifier by the first terminal device side is not limited in this embodiment. For example, the first identifier may be obtained from a network device side, or may be an identifier determined by the first terminal device based on a transmission requirement.

S202: The relay device sends a second identifier to the second terminal device based on the first identifier.

Correspondingly, the second terminal device receives the second identifier from the relay device. The second identifier indicates the first security protection parameter.

S203: The first terminal device sends a PDCP entity configuration to the second terminal device by using the relay device.

Correspondingly, the second terminal device receives the PDCP entity configuration. The PDCP entity configuration is associated with the first identifier, or both the PDCP entity configuration and the first identifier are associated with an SLRB configuration sent by the first terminal device to the second device.

For how to associate the PDCP entity configuration with the first identifier, for example, refer to the following implementations.

In a possible implementation, when sending the PDCP entity configuration to the second terminal device by using the relay device, the first terminal device further sends a PDCP entity configuration identifier (for example, a PDCP entity configuration index). Correspondingly, when sending the second identifier to the second terminal device, the relay device also sends the PDCP entity configuration identifier. Alternatively, when sending the PDCP entity configuration to the second terminal device by using the relay device, the first terminal device further sends an RB configuration identifier (for example, an RB configuration index). Correspondingly, when sending the second identifier to the second terminal device, the relay device also sends the RB configuration identifier.

In this way, the second terminal device may determine, based on the PDCP entity configuration identifier or the RB configuration identifier, that the received PDCP entity configuration has an association relationship with the second identifier.

It should be noted that an RB specifically configured in the RB configuration herein is related to a link used when the first terminal device and the second terminal device perform data transmission through the relay device. When the first terminal device and the second terminal device perform SL communication through the relay device, the RB configuration may be related to an SLRB configuration. For example, the bearer RB configuration is the SLRB configuration, or indicates the SLRB configuration.

It should be noted that a sequence of performing step S203 and steps S201 and S202 is not limited in this application. For example, step S203 may be performed before step S201 and step S202, or may be performed after step S201 and step S202, or may be performed between step S201 and step S202.

S204: The second terminal device establishes the second PDCP entity based on the PDCP entity configuration.

It should be noted that a sequence of performing step S204 and steps S201 and S202 is not limited in this application. For example, step S204 may be performed before step S201 and step S202, or may be performed after step S201 and step S202, or may be performed between step S201 and step S202.

That is, step S204 may be performed at any moment after step S203.

S205: When the first data is transmitted between the second PDCP entity of the second terminal device and the first PDCP entity of the first terminal device through the relay device, the second PDCP entity of the second terminal device performs security protection on the first data by using the first security protection parameter.

Optionally, the security protection parameter in this embodiment of this application may include, for example, at least some input parameters of the security protection algorithm. For example, the first security protection parameter is a BEARER parameter. The first PDCP entity of the first terminal device uses the first identifier as a BEARER parameter in input parameters of a security protection (for example, encryption and/or integrity protection) algorithm. Correspondingly, the second PDCP entity of the second terminal device uses the second identifier as a BEARER parameter in input parameters of security protection (for example, decryption and/or integrity verification). Alternatively, the second PDCP entity of the second terminal device uses the second identifier as a BEARER parameter in input parameters of security protection (for example, encryption and/or integrity protection). Correspondingly, the first PDCP entity of the first terminal device uses the first identifier as a BEARER parameter in input parameters of security protection (for example, decryption and/or integrity verification).

It may be understood that the first PDCP entity and the second PDCP entity described herein correspond to each other, and may be understood as follows: When the first terminal device sends the data to the second terminal device by using the relay device, the first PDCP entity is a sending entity of the data, and the second PDCP entity is a receiving entity of the data. When the second terminal device sends the data to the first terminal device by using the relay device, the second PDCP entity is a sending entity of the data, and the first PDCP entity is a receiving entity of the data.

Optionally, when the first terminal device determines that the first terminal device and the second terminal device perform unicast communication or unicast connection through the relay device, the first terminal device sends the sidelink bearer SLRB configuration to the second terminal device by using the relay device. That is, the method procedure shown in FIG. 6 is performed.

It can be learned from the foregoing procedure description that, in this embodiment of this application, a manner of sending the second identifier to the second terminal device by the relay device is constrained. To be specific, the relay device needs to determine the second identifier based on the first identifier, so that both the two identifiers may indicate the first security protection parameter. In this way, the security protection parameter indicated by the identifier sent by the relay device to the second terminal device is the same as the security protection parameter used by the first terminal device, and the PDCP entities corresponding to the first terminal device and the second terminal device may use the same security protection parameter to perform security protection on the data transmitted between the PDCP entities. It should be understood that the foregoing first security protection parameter may be a security protection parameter used when the first PDCP entity and the second PDCP entity perform security protection at the AS, for example, the foregoing BEARER parameter.

In a possible implementation, the first identifier and the second identifier may be, for example, identifiers specially indicating the first security protection parameter. For example, the first identifier may be, for example, an identifier that is newly added to a first RLC bearer configuration sent by the first terminal device to the relay device and that specially indicates the security protection parameter. Correspondingly, the second identifier may be, for example, an identifier that is newly added to a second RLC bearer configuration sent by the relay device to the second terminal device and that specially indicates the security protection parameter. For example, the first identifier is, for example, located in an LCH configuration of the first RLC bearer configuration, and the second identifier is, for example, located in an LCH configuration of the second RLC bearer configuration.

In another possible implementation, in addition to indicating the foregoing first security protection parameter, the first identifier may further indicate a logical channel (logical channel, LCH) between the first terminal device and the relay device, that is, an LCH for transmitting data sent by the first terminal device to the relay device. Correspondingly, in addition to indicating the foregoing first security protection parameter, the second identifier may further indicate a logical channel LCH between the relay device and the second terminal device, that is, an LCH for transmitting data sent by the relay device to the second terminal device.

In another possible implementation, in addition to indicating the foregoing first security protection parameter, the first identifier may further indicate a logical channel (logical channel, LCH) between the first terminal device and the relay device, that is, an LCH for transmitting data that is of the first PDCP entity and that is sent by the first terminal device to the relay device. Correspondingly, in addition to indicating the foregoing first security protection parameter, the second identifier may further indicate a logical channel LCH between the relay device and the second terminal device, that is, an LCH for transmitting data that is of the second PDCP entity and that is sent by the relay device to the second terminal device.

In the foregoing two possible implementations, optionally, first information of the first identifier may be the same as second information of the second identifier. To be specific, the first information of the first identifier is associated with the first security protection parameter, and the second information of the second identifier is associated with the first security protection parameter; or there is a mapping relationship between the first information of the first identifier and the first security protection parameter, and there is a mapping relationship between the second information of the second identifier and the first security protection parameter; or there is a correspondence between the first information of the first identifier and the first security protection parameter, and there is a correspondence between the second information of the second identifier and the first security protection parameter; or the first information of the first identifier and the second information of the second identifier indicate the first security protection parameter.

For example, the first information may include, for example, a bit of a first quantity of the first identifier, and correspondingly, the second information may include, for example, a bit of a first quantity of the second identifier. Alternatively, the first information may be, for example, a bit of a first quantity of the first identifier, and correspondingly, the second information may be, for example, a bit of a first quantity of the second identifier. The bit of the first quantity herein may be a plurality of consecutive low bits or a plurality of consecutive low significant bits; or the bit of the first quantity may be a plurality of consecutive intermediate bits or a plurality of consecutive intermediate significant bits; or the bit of the first quantity may be a plurality of consecutive high bits or a plurality of consecutive high significant bits.

For example, the first information may include, for example, five low bits of the first identifier, and the second information may include, for example, five low bits of the second identifier. Alternatively, the first information may include, for example, five LSBs of the first identifier, and the second information may include, for example, five LSBs of the second identifier.

It should be understood that, although an example in which a value of the first quantity is 5 is used for description herein, the value of the first quantity is not limited in this application. For example, the first quantity may alternatively be another value.

In addition, the value of the first quantity may be predefined, or may be obtained by the first terminal device from the network device side, or may be determined by the first terminal device and the second terminal device through negotiation. This is not limited in this embodiment of this application.

In the foregoing two possible implementations, optionally, the first identifier is the same as the second identifier. To be specific, the first identifier is associated with the first security protection parameter, and the second identifier is associated with the first security protection parameter; or there is a mapping relationship between the first identifier and the first security protection parameter, and there is a mapping relationship between the second identifier and the first security protection parameter; or there is a correspondence between the first identifier and the first security protection parameter, and there is a correspondence between the second identifier and the first security protection parameter.

For example, when the first identifier may further indicate the logical channel (logical channel, LCH) between the first terminal device and the relay device in addition to indicating the foregoing first security protection parameter, the first identifier may be, for example, an LCID 1 in the LCH configuration of the first RLC bearer configuration, and the LCID 1 is an LCID that is between the first terminal device and the relay device and that is allocated by the first terminal device. Correspondingly, when the second identifier may further indicate the logical channel LCH between the relay device and the second terminal device in addition to indicating the foregoing first security protection parameter, the second identifier may be, for example, an LCID 2 in the LCH configuration of the second RLC bearer configuration, and the LCID 2 is an LCID that is between the relay device and the second terminal device and that is allocated by the relay device.

For example, when the first identifier may further indicate the logical channel (logical channel, LCH) between the first terminal device and the relay device in addition to indicating the foregoing first security protection parameter, the first identifier may be, for example, an LCID 1 in the LCH configuration of the first RLC bearer configuration, and the LCID 1 is an LCID that is used for data transmission of the first PDCP entity between the first terminal device and the relay device and that is allocated by the first terminal device.

Correspondingly, when the second identifier may further indicate the logical channel LCH between the relay device and the second terminal device in addition to indicating the foregoing first security protection parameter, the second identifier may be, for example, an LCID 2 in the LCH configuration of the second RLC bearer configuration, and the LCID 2 is an LCID that is used for data transmission of the second PDCP entity between the relay device and the second terminal device and that is allocated by the relay device.

In other words, in this example, although the LCID is reused to indicate the security protection parameter (for example, the BEARER parameter), a manner of allocating the LCID by the relay device is constrained. In this way, both the LCID that is between the first terminal device and the relay device and that is allocated by the first terminal device and the LCID that is between the relay device and the second terminal device and that is allocated by the relay device are associated with a same security protection parameter, so that the PDCP entities corresponding to the first terminal device and the second terminal device may use the same security protection parameter to perform security protection on the data transmitted between the PDCP entities.

In this example, that the first terminal device sends a first identifier to the relay device in the foregoing S201 may include, for example: The first terminal device sends the first RLC bearer configuration to the relay device. Correspondingly, the relay device receives the first RLC bearer configuration. The first RLC bearer configuration includes the first identifier.

That the relay device sends a second identifier to the second terminal device based on the first identifier in the foregoing S202 may include, for example: The relay device sends the second RLC bearer configuration to the second terminal device based on the first identifier. Correspondingly, the second terminal device receives the second RLC bearer configuration. The second RLC bearer configuration includes the second identifier.

According to the communication method provided in this embodiment of this application, the behavior of the relay device side is constrained, so that the security protection parameter indicated by the identifier sent by the relay device to the second terminal device is the same as the security protection parameter used by the first terminal device, and the PDCP entities corresponding to the first terminal device and the second terminal device may use the same security protection parameter to perform security protection on the data transmitted between the PDCP entities. When the method is applied to an L2 UE to UE Relay scenario, a PDCP entity 1 of the first terminal device and a PDCP entity 2 of the second terminal device may use a same BEARER parameter, to ensure correctness and effectiveness of SL security protection, so that SL communication can be appropriately performed.

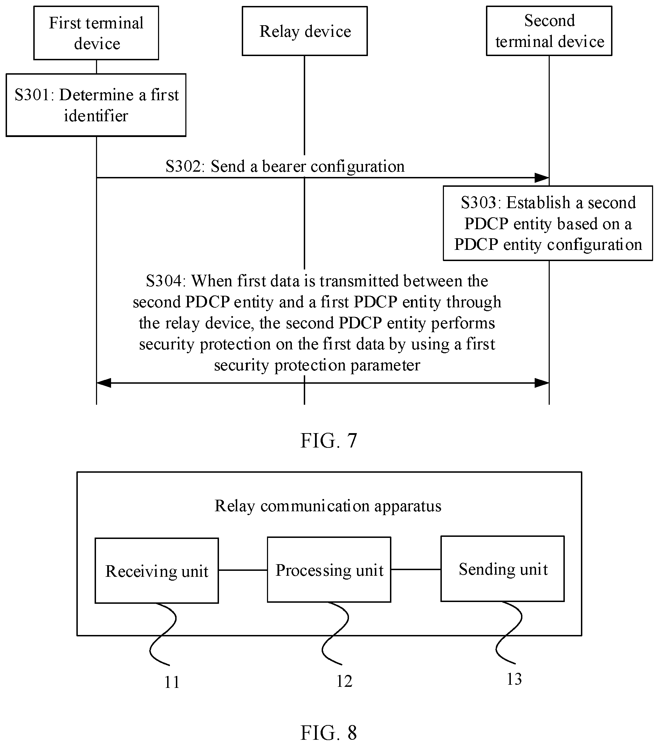

FIG. 7 is a schematic flowchart of another communication method according to an embodiment of this application. As shown in FIG. 7, when the manner 2 is used, the method may include the following steps.

S301: The first terminal device determines a first identifier.

The first identifier indicates a first security protection parameter. The first security protection parameter herein is used to perform security protection on first data. In other words, the first security protection parameter is used for security protection of the first data. The first data is data transmitted between a first PDCP entity of the first terminal device and a second PDCP entity of the second terminal device. Alternatively, the first identifier indicates a first security protection parameter used when a first PDCP entity of the first terminal device sends data to a second PDCP entity of the second terminal device.

A manner of determining the first identifier by the first terminal device is not limited in this embodiment. For example, the first identifier may be obtained from a network device side, or may be an identifier determined by the first terminal device based on a transmission requirement.

S302: The first terminal device sends a radio bearer configuration to the second terminal device by using the relay device.

The radio bearer (radio bearer, RB) configuration may include, for example, the first identifier and a PDCP entity configuration. Alternatively, the RB configuration includes, for example, a PDCP entity configuration, and the PDCP entity configuration includes the first identifier. That is, when the first terminal device and the second terminal device exchange the PDCP entity configuration, the first identifier associated with the first security protection parameter is carried, or the PDCP entity includes the first identifier.

In other words, the PDCP entity configuration is associated with the first identifier, and is no longer associated with an LCID in an LCH configuration in an RLC bearer configuration. It can be learned from the protocol stack shown in FIG. 2 that, for the relay device, all RB configurations related to PDCP entity configurations are processed in a transparent transmission manner. Therefore, when forwarding the RB configuration, the relay device does not modify content in the RB configuration. In this way, the second terminal device may enable, by using the received first identifier, the PDCP entities corresponding to the first terminal device and the second terminal device to use the same security protection parameter to perform security protection on the data transmitted between the PDCP entities.

It should be understood that, in this implementation, the LCH configuration in the RLC bearer configuration may still carry an LCID, but in this case, the LCID carried in the LCH configuration no longer indicates the first security protection parameter.

It should be noted that an RB specifically configured in the RB configuration herein is related to a link used when the first terminal device and the second terminal device perform data transmission through the relay device. When the first terminal device and the second terminal device perform SL communication through the relay device, the RB configuration may be related to an SLRB configuration. For example, the bearer RB configuration is the SLRB configuration, or indicates the SLRB configuration.

S303: The second terminal device establishes the second PDCP entity based on the PDCP entity configuration.

S304: When the first data is transmitted between the second PDCP entity of the second terminal device and the first PDCP entity of the first terminal device through the relay device, the second PDCP entity of the second terminal device performs security protection on the first data by using the first security protection parameter.

For descriptions of step S303 and step S304, refer to the foregoing descriptions of step S204 and step S205. Details are not described herein again.

It can be learned from the foregoing procedure description that, in this embodiment of this application, a manner of indicating the first security protection parameter is modified. The first security protection parameter is indicated by using another first identifier that is in the RB configuration and that is not changed by the relay device, and the LCID in the RLC bearer configuration no longer indicates the first security protection parameter. Therefore, when forwarding the first identifier, the relay device sends the first identifier to the second terminal device in a transparent transmission manner, and does not modify the first identifier. In this way, the second terminal device may enable, by using the received first identifier, the PDCP entities corresponding to the first terminal device and the second terminal device to use the same security protection parameter to perform security protection on the data transmitted between the PDCP entities. It should be understood that the foregoing first security protection parameter may be a security protection parameter used when the first PDCP entity and the second PDCP entity perform security protection at the AS, for example, the foregoing BEARER parameter.

Optionally, the first identifier may be, for example, an identifier (for example, an LCID) of a logical channel. The identifier of the logical channel may be an identifier of a logical channel between the first terminal device and the relay device, or may not be an identifier of a logical channel between the first terminal device and the relay device, but an identifier of a logical channel allocated or determined by the first terminal device in another manner. That is, when the first identifier is an identifier of a logical channel, the logical channel corresponding to the identifier of the logical channel may be a logical channel used for actual data transmission between the first terminal device and the relay device, or may not be a logical channel used for actual data transmission between the first terminal device and the relay device. This is not limited in this application.

Optionally, the first identifier may be, for example, an identifier (for example, an LCID) of a logical channel. The identifier of the logical channel may be an identifier of a logical channel used for data transmission of the first PDCP entity between the first terminal device and the relay device, or may not be an identifier of a logical channel used for data transmission of the first PDCP entity between the first terminal device and the relay device, but an identifier of a logical channel allocated or determined by the first terminal device in another manner.

For example, first information of the first identifier is associated with the first security protection parameter; or there is a mapping relationship between first information of the first identifier and the first security protection parameter; or there is a correspondence between first information of the first identifier and the first security protection parameter; or first information of the first identifier indicates the first security protection parameter. For example, the first information may include, for example, a bit of a first quantity of the first identifier. The bit of the first quantity herein may be a plurality of consecutive low bits or a plurality of consecutive low significant bits; or the bit of the first quantity may be a plurality of consecutive intermediate bits or a plurality of consecutive intermediate significant bits; or the bit of the first quantity may be a plurality of consecutive high bits or a plurality of consecutive high significant bits.

For example, the first information may include, for example, five low bits of the first identifier. Alternatively, the first information may include, for example, five LSBs of the first identifier.

It should be understood that, although an example in which a value of the first quantity is 5 is used for description herein, the value of the first quantity is not limited in this application. For example, the first quantity may alternatively be another value.

In addition, the value of the first quantity may be predefined, or may be obtained by the first terminal device from the network device side, or may be determined by the first terminal device and the second terminal device through negotiation. This is not limited in this embodiment of this application.

For another example, the first identifier is associated with the first security protection parameter; or there is a mapping relationship between the first identifier and the first security protection parameter; or there is a correspondence between the first identifier and the first security protection parameter.

Optionally, the first identifier may be associated with, for example, any one of the following: an identifier of the RB configuration and an identifier of the RB.

For example, the first identifier may be the identifier of the RB configuration, or may include the identifier of the RB configuration. To be specific, the identifier of the RB configuration is associated with the first security protection parameter; or there is a mapping relationship between the identifier of the RB configuration and the first security protection parameter; or there is a correspondence between the identifier of the RB configuration and the first security protection parameter. For example, the RB is an SLRB. The identifier of the RB configuration herein may be, for example, an SLRB configuration index (for example, an SLRB-PCS-ConfigIndex). For another example, the first identifier may be an SLRB identifier (for example, an SLRB ID).

For example, the first identifier may include third information of the identifier of the RB configuration, or the first identifier may be third information. The third information is associated with the first security protection parameter; or there is a mapping relationship between the third information and the first security protection parameter; or there is a correspondence between the third information and the first security protection parameter; or the third information indicates the first security protection parameter.

For example, the third information may include, for example, a bit of a second quantity of the identifier of the RB configuration, or the third information may be, for example, a bit of a second quantity of the identifier of the RB configuration. The bit of the second quantity herein may be a plurality of consecutive low bits or a plurality of consecutive low significant bits. For example, the third information may include, for example, five low bits of the identifier of the RB configuration, or the third information may include, for example, five LSBs of the identifier of the RB configuration.

For another example, the third information may be, for example, obtained by performing an operation on the identifier of the RB configuration. The operation described herein may be, for example, a division operation or a multiplication operation. For example, if the identifier of the RB configuration is an RB configuration index, the third information may be, for example, a remainder of an RB configuration index modulo 32, or a remainder of an RB configuration index modulo 32 plus M. M is an integer greater than or equal to 1.

For example, the first identifier may include the identifier of the RB, or the first identifier may be the identifier of the RB. To be specific, the identifier of the RB is associated with the first security protection parameter; or there is a mapping relationship between the identifier of the RB and the first security protection parameter; or there is a correspondence between the identifier of the RB and the first security protection parameter. For example, if the first security protection parameter is BEARER, the identifier of the RB may be, for example, an RB ID.

For example, the first identifier may include fourth information of the identifier of the RB, or the first identifier may be fourth information. The fourth information is associated with the first security protection parameter; or there is a mapping relationship between the fourth information and the first security protection parameter; or there is a correspondence between the fourth information and the first security protection parameter; or the fourth information indicates the first security protection parameter.

For example, the fourth information may include, for example, a bit of a third quantity of the identifier of the RB, or the fourth information may be, for example, a bit of a third quantity of the identifier of the RB. The bit of the third quantity herein may be a plurality of consecutive low bits or a plurality of consecutive low significant bits. For example, the fourth information may include, for example, five low bits of the identifier of the RB, or the fourth information may include, for example, five LSBs of the identifier of the RB.

For another example, the fourth information may be, for example, obtained by performing an operation on the identifier of the RB. The operation described herein may be, for example, a division operation or a multiplication operation. For example, the fourth information may be, for example, a remainder of an RB identity modulo 32, or a remainder of the identifier of the RB plus N. N is an integer greater than or equal to 1.

It should be understood that when the first terminal device determines that the first terminal device and the second terminal device perform unicast communication or unicast connection through the relay device, the first terminal device sends the sidelink bearer RB configuration to the second terminal device by using the relay device. That is, the method procedure shown in FIG. 7 is performed. Optionally, when the first terminal device determines that unicast communication between the first terminal device and the second terminal device does not need to pass through the relay device, security protection parameters used by the first terminal device and the second terminal device may be indicated in the manner shown in this embodiment of this application, or security protection parameters may be indicated by the LCID in the LCH configuration in the RLC bearer configuration. This is not limited herein.

According to the communication method provided in this embodiment of this application, another parameter that is in the RB configuration and that is not changed by the relay device indicates the security protection parameter, so that the PDCP entities corresponding to the first terminal device and the second terminal device may use the same security protection parameter to perform security protection on the data transmitted between the PDCP entities. When the method is applied to an L2 UE to UE Relay scenario, a PDCP entity 1 of the first terminal device and a PDCP entity 2 of the second terminal device may use a same BEARER parameter, to ensure correctness and effectiveness of SL security protection, so that SL communication can be appropriately performed.

It should be noted that, although the embodiments shown in FIG. 6 and FIG. 7 describe how to send the first identifier indicating the first security protection parameter to the relay device, how the second terminal device and the first terminal device determine the first security protection parameter based on the first identifier is not limited in this application. For example, the mapping relationship between the first identifier and the first security protection parameter is predefined, or is obtained from the network device side.

The foregoing describes in detail the method provided in this embodiment of this application. The following describes in detail an apparatus and a device provided in embodiments of this application. To implement functions in the method provided in the foregoing embodiments of this application, each network element may include a hardware structure and/or a software module, and implement the foregoing functions in a form of the hardware structure, the software module, or a combination of the hardware structure and the software module. Whether a specific function in the foregoing functions is performed in the form of the hardware structure, the software module, or the combination of the hardware structure and the software module depends on particular applications and design constraints of the technical solutions.

FIG. 8 is a schematic diagram of a structure of a relay communication apparatus according to an embodiment of this application. It may be understood that the relay communication apparatus may correspondingly implement operations or steps of corresponding relay devices in the foregoing method embodiments. The relay communication apparatus may be a relay device or may be a component that may be configured in a relay device. It should be understood that the relay device described herein may be, for example, a terminal device, a network device, or any device that can forward data of a first terminal device to a second terminal device. Optionally, the network device described herein may be, for example, the foregoing base station.

As shown in FIG. 8, the relay communication apparatus may include a receiving unit 11, a processing unit 12, and a sending unit 13. Optionally, the receiving unit 11 and the sending unit 13 may be integrated into a transceiver unit, or may be separated.

The receiving unit 11 is configured to receive a first identifier from the first terminal device, where the first identifier indicates a first security protection parameter, the first security protection parameter is used for security protection of first data, and the first data is data transmitted between a first packet data convergence protocol PDCP entity of the first terminal device and a second PDCP entity of the second terminal device.

The processing unit 12 is configured to send a second identifier to the second terminal device based on the first identifier by using the sending unit 13, where the second identifier indicates the first security protection parameter.

In a possible implementation, the first identifier further indicates a logical channel between the first terminal device and the relay device, and the second identifier further indicates a logical channel between the relay device and the second terminal device. For example, first information of the first identifier is the same as second information of the second identifier; or the first identifier is the same as the second identifier. For example, the first information includes a low bit of a first quantity of the first identifier, and the second information includes a low bit of a first quantity of the second identifier.

In a possible implementation, the receiving unit 11 is specifically configured to receive a first radio link control bearer configuration from the first terminal device, and the first radio link control bearer configuration includes the first identifier.

In a possible implementation, the processing unit 12 is specifically configured to send a second radio link control bearer configuration to the second terminal device based on the first identifier by using the sending unit 13, and the second radio link control bearer configuration information includes the second identifier.

The relay communication apparatus provided in this embodiment may perform actions of the relay device in the method embodiment corresponding to FIG. 6. Implementation principles and technical effect of the relay communication apparatus are similar. Details are not described herein again.

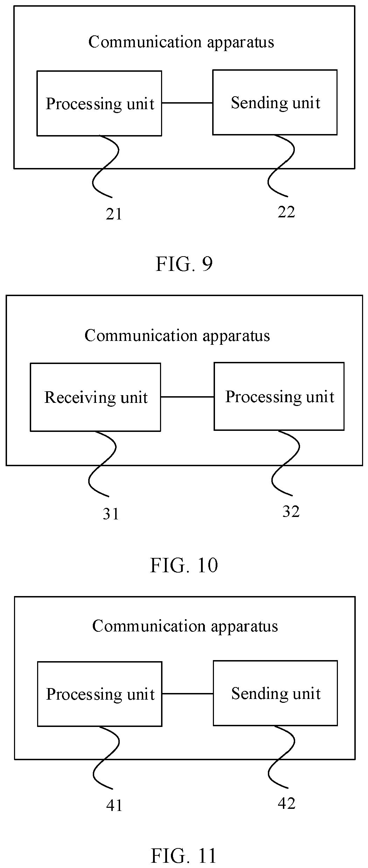

FIG. 9 is a schematic diagram of a structure of a communication apparatus according to an embodiment of this application. It may be understood that the communication apparatus may correspondingly implement the operations or steps of the corresponding first terminal devices in the foregoing method embodiments. The communication apparatus may be a first terminal device or may be a component that may be configured in a first terminal device. As shown in FIG. 9, the communication apparatus may include a processing unit 21 and a sending unit 22. Optionally, the sending unit 22 may be integrated into a transceiver unit.

The processing unit 21 is configured to determine a first identifier, where the first identifier indicates a first security protection parameter, the first security protection parameter is used for security protection of first data, and the first data is data transmitted between a first packet data convergence protocol PDCP entity of the first terminal device and a second PDCP entity of a second terminal device.

The sending unit 22 is configured to send a sidelink bearer SLRB configuration to the second terminal device by using a relay device, where the SLRB configuration includes the first identifier and a PDCP entity configuration; or the SLRB configuration includes the PDCP entity configuration, and the PDCP entity configuration includes the first identifier.

In a possible implementation, the first identifier is an identifier of a logical channel between the first terminal device and the relay device. For example, first information of the first identifier is associated with the first security protection parameter; or the first identifier is associated with the first security protection parameter. For example, the first information includes a low bit of a first quantity of the first identifier.

In a possible implementation, the first identifier is associated with any one of the following: an identifier of the SLRB configuration and an identifier of an SLRB.

The communication apparatus provided in this embodiment may perform actions of the first terminal device in the method embodiment corresponding to FIG. 7. Implementation principles and technical effect of the communication apparatus are similar. Details are not described herein again.

FIG. 10 is a schematic diagram of a structure of another communication apparatus according to an embodiment of this application. It may be understood that the communication apparatus may correspondingly implement the operations or steps of the corresponding second terminal devices in the foregoing method embodiments. The communication apparatus may be a second terminal device or may be a component that may be configured in a second terminal device. As shown in FIG. 10, the communication apparatus may include a receiving unit 31 and a processing unit 32. Optionally, the receiving unit 31 may be integrated into a transceiver unit.

The receiving unit 31 is configured to receive a second identifier from a relay device, and receive a PDCP entity configuration from a first terminal device by using the relay device, where the second identifier indicates a first security protection parameter, the first security protection parameter is used for security protection of first data, and the first data is data transmitted between a first packet data convergence protocol PDCP entity of the first terminal device and a second PDCP entity of the second terminal device.

The processing unit 32 is configured to establish the second PDCP entity based on the PDCP entity configuration.

The processing unit 32 is further configured to: when the first data is transmitted between the second PDCP entity and the first PDCP entity of the first terminal device through the relay device, perform security protection on the first data by using the first security protection parameter.

In a possible implementation, the second identifier further indicates a logical channel between the relay device and the second terminal device.

In a possible implementation, second information of the second identifier is associated with the first security protection parameter; or the second identifier is associated with the first security protection parameter.

In a possible implementation, the second information includes a low bit of a first quantity of the second identifier.

In a possible implementation, the receiving unit 31 is specifically configured to receive a second radio link control bearer configuration from the relay device, and the second radio link control bearer configuration information includes the second identifier.

The communication apparatus provided in this embodiment may perform actions of the second terminal device in the method embodiment corresponding to FIG. 6. Implementation principles and technical effect of the communication apparatus are similar. Details are not described herein again.

FIG. 11 is a schematic diagram of a structure of still another communication apparatus according to an embodiment of this application. It may be understood that the communication apparatus may correspondingly implement the operations or steps of the corresponding second terminal devices in the foregoing method embodiments. The communication apparatus may be a second terminal device or may be a component that may be configured in a second terminal device. As shown in FIG. 11, the communication apparatus may include a receiving unit 41 and a processing unit 42. Optionally, the receiving unit 41 may be integrated into a transceiver unit.

The receiving unit 41 is configured to receive a radio bearer RB configuration from a first terminal device by using a relay device, where the RB configuration includes a first identifier and a PDCP entity configuration; or the RB configuration includes the PDCP entity configuration, and the PDCP entity configuration includes the first identifier; the first identifier indicates a first security protection parameter; and the first security protection parameter is used for security protection of first data, and the first data is data transmitted between a first packet data convergence protocol PDCP entity of the first terminal device and a second PDCP entity of the second terminal device.

The processing unit 42 is configured to establish the second PDCP entity based on the PDCP entity configuration.

The processing unit 42 is further configured to: when the first data is transmitted between the second PDCP entity and the first PDCP entity of the first terminal device through the relay device, perform security protection on the first data by using the first security protection parameter.

In a possible implementation, the first identifier is an identifier of a logical channel between the first terminal device and the relay device.

In a possible implementation, first information of the first identifier is associated with the first security protection parameter; or the first identifier is associated with the first security protection parameter.

In a possible implementation, the first information includes a low bit of a first quantity of the first identifier.

In a possible implementation, the first identifier is associated with any one of the following: an identifier of the RB configuration and an identifier of an SLRB.

The communication apparatus provided in this embodiment may perform actions of the second terminal device in the method embodiment corresponding to FIG. 7. Implementation principles and technical effect of the communication apparatus are similar. Details are not described herein again.

Optionally, the relay communication apparatuses in FIG. 8 to FIG. 11 may further include at least one storage unit. The storage unit may include data and/or instructions. Each unit of the apparatuses may read the data and/or the instructions in the storage unit to implement a corresponding method.

It should be noted that, it should be understood that in the foregoing embodiments, the sending unit may be a transmitter during actual implementation, and the receiving unit may be a receiver during actual implementation. Alternatively, the sending unit and the receiving unit are implemented by using a transceiver. Alternatively, the sending unit and the receiving unit are implemented by using a communication port. The processing unit may be implemented in a form of software invoked by a processing element, or may be implemented in a form of hardware. For example, the processing unit may be at least one separately disposed processing element, or may be integrated into a chip of the foregoing apparatus for implementation. In addition, the processing unit may be stored in a memory of the foregoing apparatus in a form of program code, and may be invoked by a processing element of the foregoing apparatus to perform a function of the foregoing processing module. In addition, all or some of the units may be integrated, or may be implemented independently. The processing element herein may be an integrated circuit, and have a signal processing capability. In an implementation process, the steps of the foregoing method or the foregoing units may be implemented by using a hardware integrated logic circuit in the processor element, or by using instructions in a form of software.

For example, the foregoing units may be configured as one or more integrated circuits for implementing the foregoing method, for example, one or more application-specific integrated circuits (application-specific integrated circuits, ASICs), one or more microprocessors (digital signal processor, DSP), or one or more field programmable gate arrays (field programmable gate arrays, FPGAs). For another example, when one of the foregoing units is implemented in a form of scheduling program code by a processing element, the processing element may be a general-purpose processor, for example, a central processing unit (central processing unit, CPU) or another processor that can invoke the program code. For another example, the units may be integrated and implemented in a form of a system-on-a-chip (system-on-a-chip, SOC).

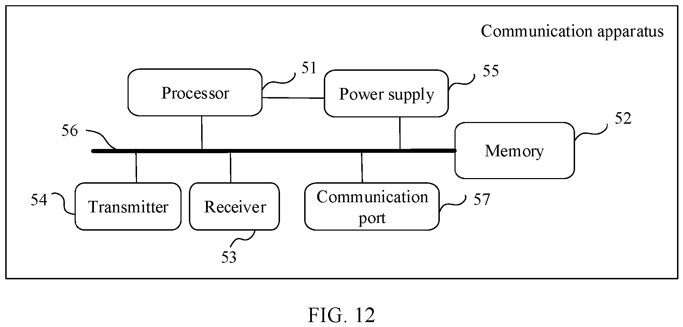

FIG. 12 is a schematic diagram of a structure of still another communication apparatus according to an embodiment of this application. As shown in FIG. 12, the communication apparatus may include a processor 51 (for example, a CPU) and a memory 52. The memory 52 may include a high-speed random-access memory (random-access memory, RAM), and may further include a non-volatile memory (non-volatile memory, NVM), for example, at least one magnetic disk memory. The memory 52 may store various instructions to complete various processing functions and implement the method steps of this application. Optionally, the relay communication apparatus in this application may further include a receiver 53 and a transmitter 54. Both the receiver 53 and the transmitter 54 are coupled to the processor 51. The processor 51 controls a receiving action of the receiver 53, and the processor 51 controls a sending action of the transmitter 54. Optionally, the relay communication apparatus in this application may further include any one of the following: a power supply 55, a communication bus 56, and a communication port 57. The receiver 53 and the transmitter 54 may be integrated into a transceiver of the communication apparatus, or may be a transceiver antenna independent of the communication apparatus. The communication bus 56 is configured to implement communication connections between elements. The foregoing communication port 57 is configured to implement connections and communication between the relay communication apparatus and another peripheral.

In this embodiment of this application, the foregoing memory 52 is configured to store computer executable program code, and the program code includes instructions. When the processor 51 executes the instructions, the instructions enable the processor 51 of the relay communication apparatus to perform actions of the relay devices in the foregoing method embodiments.

Alternatively, when the processor 51 executes the instructions, the instructions enable the processor 51 of the relay communication apparatus to perform actions of the first terminal devices in the foregoing method embodiments.

Alternatively, when the processor 51 executes the instructions, the instructions enable the processor 51 of the relay communication apparatus to perform actions of the second terminal devices in the foregoing method embodiments.

An embodiment of this application further provides a computer-readable storage medium. The computer-readable storage medium stores computer instructions used to implement the methods performed by the relay devices in the foregoing method embodiments, computer instructions used to implement the methods performed by the first terminal devices, or computer instructions used to implement the methods performed by the second terminal devices.

For example, when the computer instructions are executed, a relay communication apparatus can implement the methods performed by the relay devices, the methods performed by the first terminal devices, or the methods performed by the second terminal devices in the foregoing method embodiments.

An embodiment of this application further provides a computer program product including instructions. When the instructions are executed, a computer is enabled to implement the methods performed by the relay devices, the methods performed by the first terminal devices, or the methods performed by the second terminal devices in the foregoing method embodiments.

An embodiment of this application further provides a relay communication system. The relay communication system includes the first terminal device, the second terminal device, and the relay device in the foregoing embodiments.

In an example, the relay communication system includes the first terminal device, the second terminal device, and the relay device in the foregoing embodiment described with reference to FIG. 6.

In an example, the communication system includes the first terminal device, the second terminal device, and the relay device in the foregoing embodiment described with reference to FIG. 7.

All or some of the technical solutions provided in embodiments of this application may be implemented by using software, hardware, firmware, or any combination thereof. When software is used to implement the technical solutions, all or some of the technical solutions may be implemented in a form of a computer program product. The computer program product includes one or more computer instructions. When the computer program instructions are loaded and executed on a computer, procedures or functions according to embodiments of the present invention are all or partially generated. The computer may be a general-purpose computer, a dedicated computer, a computer network, a network device, a terminal device, a core network device, a machine learning device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

According to the method provided in embodiments of this application, this application further provides a computer-readable storage medium. The computer-readable storage medium stores program code. When the program code is executed by one or more processors, an apparatus including the processor is enabled to perform the methods in embodiments shown in FIG. 6 and FIG. 7.

In several embodiments provided in this application, it should be understood that the disclosed system, apparatus, and method may be implemented in other manners. For example, the foregoing apparatus embodiments are merely examples. For example, division of units is merely logical function division and may be other division during actual implementation. For example, a plurality of units or components may be combined or integrated into another system, or some features may be ignored or not be performed. In addition, the displayed or discussed mutual couplings or direct couplings or communication connections may be implemented through some interfaces. The indirect couplings or communication connections between apparatuses or units may be implemented in electronic, mechanical, or another form.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions of embodiments.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A relay communication method, wherein a first terminal device and a second terminal device perform data transmission through a relay device, and the method comprises:
receiving, by the relay device, a first identifier from the first terminal device, wherein the first identifier indicates a first security protection parameter, the first security protection parameter is used for security protection of first data, and the first data is data transmitted between a first packet data convergence protocol PDCP entity of the first terminal device and a second PDCP entity of the second terminal device; and
sending, by the relay device, a second identifier to the second terminal device based on the first identifier, wherein the second identifier indicates the first security protection parameter.

2. The method according to claim 1, wherein the first identifier further indicates a logical channel between the first terminal device and the relay device, and the second identifier further indicates a logical channel between the relay device and the second terminal device.

3. The method according to claim 1, wherein the first identifier further indicates a logical channel for data transmission of the first PDCP entity between the first terminal device and the relay device, and the second identifier further indicates a logical channel for data transmission of the second PDCP entity between the relay device and the second terminal device.

4. The method according to any one of claims 1 to 3, wherein
first information of the first identifier is the same as second information of the second identifier; or
the first identifier is the same as the second identifier.

5. The method according to claim 4, wherein the first information comprises a low bit of a first quantity of the first identifier, and the second information comprises a low bit of a first quantity of the second identifier.

6. The method according to any one of claims 1 to 5, wherein the receiving, by the relay device, a first identifier from the first terminal device comprises:
receiving, by the relay device, a first radio link control bearer configuration from the first terminal device, wherein the first radio link control bearer configuration comprises the first identifier.

7. The method according to claim 6, wherein the sending, by the relay device, a second identifier to the second terminal device based on the first identifier comprises:
sending, by the relay device, a second radio link control bearer configuration to the second terminal device based on the first identifier, wherein the second radio link control bearer configuration information comprises the second identifier.

8. A relay communication method, wherein a first terminal device and a second terminal device perform data transmission through a relay device, and the method comprises:
determining, by the first terminal device, a first identifier, wherein the first identifier indicates a first security protection parameter, the first security protection parameter is used for security protection of first data, and the first data is data transmitted between a first packet data convergence protocol PDCP entity of the first terminal device and a second PDCP entity of the second terminal device; and
sending, by the first terminal device, a radio bearer RB configuration to the second terminal device by using the relay device, wherein the RB configuration comprises the first identifier and a PDCP entity configuration; or the RB configuration comprises the PDCP entity configuration, and the PDCP entity configuration comprises the first identifier.

9. The method according to claim 8, wherein the first identifier is an identifier of a logical channel between the first terminal device and the relay device.

10. The method according to claim 8, wherein the first PDCP entity of the first terminal device and the second PDCP entity of the second terminal device perform data transmission through a first logical channel, and the first logical channel is a logical channel between the first terminal device and the relay device.

11. The method according to claim 8, wherein the first identifier is an identifier of a second logical channel, and the second logical channel is a logical channel between the first terminal device and the relay device.

12. The method according to claim 10 or 11, wherein the first logical channel and the second logical channel are different logical channels.

13. The method according to any one of claims 8 to 12, wherein first information of the first identifier is associated with the first security protection parameter; or the first identifier is associated with the first security protection parameter.

14. The method according to claim 13, wherein the first information comprises a low bit of a first quantity of the first identifier.

15. The method according to claim 8, wherein the first identifier is associated with any one of the following:
an identifier of the RB configuration and an identifier of an RB.

16. A relay communication method, wherein a first terminal device and a second terminal device perform data transmission through a relay device, and the method comprises:
receiving, by the second terminal device, a second identifier from the relay device, wherein the second identifier indicates a first security protection parameter, the first security protection parameter is used for security protection of first data, and the first data is data transmitted between a first packet data convergence protocol PDCP entity of the first terminal device and a second PDCP entity of the second terminal device;
receiving, by the second terminal device, a PDCP entity configuration from the first terminal device by using the relay device;
establishing, by the second terminal device, the second PDCP entity based on the PDCP entity configuration; and
when the first data is transmitted between the second PDCP entity of the second terminal device and the first PDCP entity of the first terminal device through the relay device, performing security protection on the first data by using the first security protection parameter.

17. The method according to claim 16, wherein the second identifier further indicates a logical channel between the relay device and the second terminal device.

18. The method according to claim 16, wherein the second identifier further indicates a logical channel for data transmission of the second PDCP entity between the relay device and the second terminal device.

19. The method according to any one of claims 16 to 18, wherein second information of the second identifier is associated with the first security protection parameter; or the second identifier is associated with the first security protection parameter.

20. The method according to claim 19, wherein the second information comprises a low bit of a first quantity of the second identifier.

21. The method according to any one of claims 16 to 20, wherein the receiving, by the second terminal device, a second identifier from the relay device comprises:
receiving, by the second terminal device, a second radio link control bearer configuration from the relay device, wherein the second radio link control bearer configuration information comprises the second identifier.

22. A relay communication method, wherein a first terminal device and a second terminal device perform data transmission through a relay device, and the method comprises:
receiving, by the second terminal device, a radio bearer RB configuration from the first terminal device by using the relay device, wherein the RB configuration comprises a first identifier and a PDCP entity configuration; or the RB configuration comprises the PDCP entity configuration, and the PDCP entity configuration comprises the first identifier; the first identifier indicates a first security protection parameter; and the first security protection parameter is used for security protection of first data, and the first data is data transmitted between a first packet data convergence protocol PDCP entity of the first terminal device and a second PDCP entity of the second terminal device;
establishing, by the second terminal device, the second PDCP entity based on the PDCP entity configuration; and
when the first data is transmitted between the second PDCP entity of the second terminal device and the first PDCP entity of the first terminal device through the relay device, performing security protection on the first data by using the first security protection parameter.

23. The method according to claim 22, wherein the first identifier is an identifier of a logical channel between the first terminal device and the relay device.

24. The method according to claim 22, wherein the first PDCP entity of the first terminal device and the second PDCP entity of the second terminal device perform data transmission through a first logical channel, and the first logical channel is a logical channel between the first terminal device and the relay device.

25. The method according to claim 22, wherein the first identifier is an identifier of a second logical channel, and the second logical channel is a logical channel between the first terminal device and the relay device.

26. The method according to claim 24 or 25, wherein the first logical channel and the second logical channel are different logical channels.

27. The method according to any one of claims 22 to 26, wherein first information of the first identifier is associated with the first security protection parameter; or the first identifier is associated with the first security protection parameter.

28. The method according to claim 27, wherein the first information comprises a low bit of a first quantity of the first identifier.

29. The method according to claim 22, wherein the first identifier is associated with any one of the following:
an identifier of the RB configuration and an identifier of an RB.

30. A relay communication apparatus, wherein a first terminal device and a second terminal device perform data transmission through a relay device, and the apparatus comprises:
a receiving unit, configured to receive a first identifier from the first terminal device, wherein the first identifier indicates a first security protection parameter, the first security protection parameter is used for security protection of first data, and the first data is data transmitted between a first packet data convergence protocol PDCP entity of the first terminal device and a second PDCP entity of the second terminal device; and
a processing unit, configured to send a second identifier to the second terminal device based on the first identifier, wherein the second identifier indicates the first security protection parameter.

31. The apparatus according to claim 30, wherein the first identifier further indicates a logical channel between the first terminal device and the relay device, and the second identifier further indicates a logical channel between the relay device and the second terminal device.

32. The apparatus according to claim 30, wherein the first identifier further indicates a logical channel for data transmission of the first PDCP entity between the first terminal device and the relay device, and the second identifier further indicates a logical channel for data transmission of the second PDCP entity between the relay device and the second terminal device.

33. The apparatus according to any one of claims 30 to 32, wherein first information of the first identifier is the same as second information of the second identifier; or
the first identifier is the same as the second identifier.

34. The apparatus according to claim 33, wherein the first information comprises a low bit of a first quantity of the first identifier, and the second information comprises a low bit of a first quantity of the second identifier.

35. The apparatus according to any one of claims 30 to 34, wherein
the receiving unit is specifically configured to receive a first radio link control bearer configuration from the first terminal device, and the first radio link control bearer configuration comprises the first identifier.

36. The apparatus according to claim 35, wherein
the processing unit is specifically configured to send a second radio link control bearer configuration to the second terminal device based on the first identifier by using a sending unit, and the second radio link control bearer configuration information comprises the second identifier.

37. A relay communication apparatus, wherein a first terminal device and a second terminal device perform data transmission through a relay device, and the apparatus comprises:
a processing unit, configured to determine a first identifier, wherein the first identifier indicates a first security protection parameter, the first security protection parameter is used for security protection of first data, and the first data is data transmitted between a first packet data convergence protocol PDCP entity of the first terminal device and a second PDCP entity of the second terminal device; and
a processing unit, configured to send a radio bearer RB configuration to the second terminal device by using the relay device, wherein the RB configuration comprises the first identifier and a PDCP entity configuration; or the RB configuration comprises the PDCP entity configuration, and the PDCP entity configuration comprises the first identifier.

38. The apparatus according to claim 37, wherein the first identifier is an identifier of a logical channel between the first terminal device and the relay device.

39. The apparatus according to claim 37, wherein the first PDCP entity of the first terminal device and the second PDCP entity of the second terminal device perform data transmission through a first logical channel, and the first logical channel is a logical channel between the first terminal device and the relay device.

40. The apparatus according to claim 37, wherein the first identifier is an identifier of a second logical channel, and the second logical channel is a logical channel between the first terminal device and the relay device.

41. The apparatus according to claim 39 or 40, wherein the first logical channel and the second logical channel are different logical channels.

42. The apparatus according to any one of claims 37 to 41, wherein first information of the first identifier is associated with the first security protection parameter; or the first identifier is associated with the first security protection parameter.

43. The apparatus according to claim 42, wherein the first information comprises a low bit of a first quantity of the first identifier.

44. The apparatus according to claim 37, wherein the first identifier is associated with any one of the following:
an identifier of the RB configuration and an identifier of an RB.

45. A communication apparatus, wherein a first terminal device and a second terminal device perform data transmission through a relay device, and the apparatus comprises:
a receiving unit, configured to:
receive a second identifier from the relay device, wherein the second identifier indicates a first security protection parameter, the first security protection parameter is used for security protection of first data, and the first data is data transmitted between a first packet data convergence protocol PDCP entity of the first terminal device and a second PDCP entity of the second terminal device; and
receive a PDCP entity configuration from the first terminal device by using the relay device; and
a processing unit, configured to:
establish the second PDCP entity based on the PDCP entity configuration; and
when the first data is transmitted between the second PDCP entity and the first PDCP entity of the first terminal device through the relay device, perform security protection on the first data by using the first security protection parameter.

46. The apparatus according to claim 45, wherein the second identifier further indicates a logical channel between the relay device and the second terminal device.

47. The apparatus according to claim 45, wherein the second identifier further indicates a logical channel for data transmission of the second PDCP entity between the relay device and the second terminal device.

48. The apparatus according to any one of claims 45 to 47, wherein second information of the second identifier is associated with the first security protection parameter; or the second identifier is associated with the first security protection parameter.

49. The apparatus according to claim 48, wherein the second information comprises a low bit of a first quantity of the second identifier.

50. The apparatus according to any one of claims 45 to 49, wherein
the receiving unit is specifically configured to receive a second radio link control bearer configuration from the relay device, and the second radio link control bearer configuration information comprises the second identifier.

51. A communication apparatus, wherein a first terminal device and a second terminal device perform data transmission through a relay device, and the apparatus comprises:
a receiving unit, configured to receive a radio bearer RB configuration from the first terminal device by using the relay device, wherein the RB configuration comprises a first identifier and a PDCP entity configuration; or the RB configuration comprises the PDCP entity configuration, and the PDCP entity configuration comprises the first identifier; the first identifier indicates a first security protection parameter; and the first security protection parameter is used for security protection of first data, and the first data is data transmitted between a first packet data convergence protocol PDCP entity of the first terminal device and a second PDCP entity of the second terminal device; and
a processing unit, configured to:
establish, by the device, the second PDCP entity based on the PDCP entity configuration; and
when the first data is transmitted between the second PDCP entity and the first PDCP entity of the first terminal device through the relay device, perform security protection on the first data by using the first security protection parameter.

52. The apparatus according to claim 51, wherein the first identifier is an identifier of a logical channel between the first terminal device and the relay device.

53. The apparatus according to claim 51, wherein the first PDCP entity of the first terminal device and the second PDCP entity perform data transmission through a first logical channel, and the first logical channel is a logical channel between the first terminal device and the relay device.

54. The apparatus according to claim 51, wherein the first identifier is an identifier of a second logical channel, and the second logical channel is a logical channel between the first terminal device and the relay device.

55. The apparatus according to claim 53 or 54, wherein the first logical channel and the second logical channel are different logical channels.

56. The apparatus according to any one of claims 51 to 55, wherein first information of the first identifier is associated with the first security protection parameter; or the first identifier is associated with the first security protection parameter.

57. The apparatus according to claim 56, wherein the first information comprises a low bit of a first quantity of the first identifier.

58. The apparatus according to claim 51, wherein the first identifier is associated with any one of the following:
an identifier of the RB configuration and an identifier of an RB.

59. A relay communication apparatus, comprising a processor and a memory, wherein the processor is coupled to the memory, the memory is configured to store a program or instructions, and when the program or the instructions are executed by the processor, the relay communication apparatus is enabled to perform the method according to any one of claims 1 to 7.

60. A communication apparatus, comprising a processor and a memory, wherein the processor is coupled to the memory, the memory is configured to store a program or instructions, and when the program or the instructions are executed by the processor, the communication apparatus is enabled to perform the method according to any one of claims 8 to 15.

61. A communication apparatus, comprising a processor and a memory, wherein the processor is coupled to the memory, the memory is configured to store a program or instructions, and when the program or the instructions are executed by the processor, the communication apparatus is enabled to perform the method according to any one of claims 16 to 29.

62. A chip, comprising at least one processor and a communication interface, wherein
the communication interface is configured to receive a signal input to the chip or a signal output from the chip, and the processor communicates with the communication interface and is configured to implement the method according to any one of claims 1 to 29 by using a logic circuit or by executing code instructions.

63. A relay communication system, wherein the relay communication system comprises a first terminal device, a relay device, and a second terminal device, and the first terminal device and the second terminal device perform data transmission through the relay device;
the relay device is configured to perform the method according to any one of claims 1 to 7; and
the second terminal device is configured to perform the method according to any one of claims 16 to 21.

64. A relay communication system, wherein the relay communication system comprises a first terminal device, a relay device, and a second terminal device, and the first terminal device and the second terminal device perform data transmission through the relay device;
the first terminal device is configured to perform the method according to any one of claims 8 to 15; and
the second terminal device is configured to perform the method according to any one of claims 22 to 29.

65. A computer-readable storage medium, wherein the computer-readable storage medium stores a computer program or instructions, and when the computer program or the instructions are executed, a computer is enabled to perform the method according to any one of claims 1 to 29.

66. A computer program product, comprising a computer program, wherein when the computer program is executed by a processor, the method according to any one of claims 1 to 29 is implemented.
